# EUROPÄISCHE PATENTSCHRIFT

(11) **EP 2 812 111 B1**
(45) Veröffentlichungstag und Bekanntmachung des Hinweises auf die Patenterteilung: **03.09.2025**
(21) Anmeldenummer: 13747145.4
(22) Anmeldetag: 07.02.2013
(51) Int. Cl.: C01B 3/40, B01J 35/70, B01J 35/61, B01J 35/60, B01J 23/78, B01J 23/89, B01J 23/83, B01J 21/04, B01J 37/03, B01J 37/00, B01J 23/00

(54) **VERFAHREN ZUR REFORMIERUNG VON KOHLENWASSERSTOFFEN IN GEGENWART EINES HEXAALUMINATHALTIGEN KATALYSATORS**
REFORMING PROCESS OF HYDROCARBONS IN THE PRESENCE OF A HEXAALUMINATE-COMPRISING CATALYST
PROCÉDÉ DE REFORMAGE D'HYDROCARBURES EN PRÉSENCE D'UN CATALYSEUR CONTENANT DE L'HEXAALUMINATE

(30) Priorität: 10.02.2012 EP 12154901
(43) Veröffentlichungstag der Anmeldung: 17.12.2014
(73) Patentinhaber: BASF SE, 67056 Ludwigshafen am Rhein (DE)
(72) Erfinder: SCHUNK, Stephan, 69126 Heidelberg (DE); MILANOV, Andrian, 68163 Mannheim (DE); STRASSER, Andreas, 69239 Neckarsteinach (DE); WASSERSCHAFF, Guido, 69151 Neckargemünd (DE); ROUSSIÈRE, Thomas, 68165 Mannheim (DE)
(74) Vertreter: BASF IP Association
(86) Internationale Anmeldenummer: PCT/IB2013/051024
(87) Internationale Veröffentlichungsnummer: WO 2013/118078

(56) Entgegenhaltungen:
- EP-A1- 2 119 671
- WO-A1-03/002252
- CN-A- 101 306 361
- CN-A- 101 306 361
- CN-A- 101 927 160
- JP-A- 2000 044 203
- US-A1- 2003 176 278
- US-A1- 2007 111 884
- US-A1- 2007 111 884
- US-A1- 2011 039 691
- US-B1- 6 413 489
- T.H. GARDNER: "Hexaaluminate catalysts for the partial oxidation of middle distillate fuels (Dissertation)", 2007, College of Engineering and Mineral Resources at West Virginia University, pages I - XII,1-162, XP002677396, Retrieved from the Internet <URL:http://wvuscholar.wvu.edu:8881//exlibris/dtl/d3_1/apache_media/L2V4bGlicmlzL2R0bC9kM18xL2FwYWNoZV9tZWRpYS8xMzU5MQ==.pdf> [retrieved on 20120607]
- J. KIRCHNEROVA ET AL, CATALYSIS LETTERS, vol. 67, no. 2/4, 1 January 2000 (2000-01-01), pages 175 - 181, XP055029132, ISSN: 1011-372X, DOI: 10.1023/A:1019069622476
- ERSSON A ET AL: "A comparison between hexaaluminates and perovskites for catalytic combustion applications", CATALYSIS TODAY, vol. 112, no. 1-4, 15 March 2006 (2006-03-15), ELSEVIER, NL, pages 157 - 160, XP027976081, ISSN: 0920-5861, [retrieved on 20060315]
- LIN-CHIUAN YAN ET AL: "Synthesis and characterization of aerogel-derived cation-substituted barium hexaaluminates", APPLIED CATALYSIS A: GENERAL, vol. 171, no. 2, 1 July 1998 (1998-07-01), pages 219 - 228, XP055029128, ISSN: 0926-860X, DOI: 10.1016/S0926-860X(98)00059-3
- XU, Z.-L., CUI, X.-H., BI, Y.-L., ZHEN, K.-J.: "Hexaaluminate Oxides LaMAl11O19-delta Catalyzing CO2 Reforming of Methane to Synthesis Gas", KAO TENG HSUEH HSIAO HUA HEUSH HSUEH PAO/ CHEMICAL JOURNAL OF CHINESE UNIVERSITIES, vol. 21, no. 2, February 2000 (2000-02-01), pages 298 - 300, XP009510765, ISSN: 0251-0790

## Beschreibung

Die Erfindung betrifft ein Verfahren zur Reformierung von Kohlenwasserstoffen, vorzugsweise CH₄, in Gegenwart von CO₂ mit hexaaluminathaltigem Katalysator. Zur Herstellung des Katalysators wird eine Aluminiumquelle, vorzugsweise ein Aluminiumhydroxid, vorzugsweise aus kleinteiligen Primärpartikel, vorzugsweise mit Primärpartikelgröße kleiner gleich 500 nm, mit einer kobalthaltigen Metallsalzlösung in Kontakt gebracht, getrocknet und kalziniert. Die Metallsalzlösung weist neben den Kobaltspezies zumindest ein Element aus der Gruppe La, Ba, Sr auf.

Die Reformierung von Methan und Kohlendioxid ist von großem wirtschaftlichem Interesse, da mittels dieses Verfahren Synthesegas hergestellt werden kann. Das Synthesegas bildet einen Rohstoff für die Herstellung von chemischen Grundstoffen. Darüber hinaus ist die Verwertung von Kohlendioxid als Ausgangsstoff bei chemischen Synthesen von signifikanter Bedeutung, um Kohlendioxid, das in zahlreichen Prozessen als Abfallprodukt anfällt, auf chemischem Weg zu binden und dadurch eine Emission in die Atmosphäre zu vermeiden.

Gemäß ihrer großen wirtschaftlichen Bedeutung bildet die Reformierung von Kohlenwasserstoffen in Gegenwart von Kohlendioxid den Gegenstand von zahlreichen Veröffentlichungen. Im Folgenden wird eine kurze Übersicht zu den inhaltlichen Schwerpunkten dieser Veröffentlichungen gegeben.

Die katalytischen Eigenschaften von nickelmodifizierten Hexaaluminaten zur Reformierung von Methan und Kohlendioxid zu Synthesegas ist beispielsweise in einer Publikation von Zhalin Xu et al. zu finden (Zhalin Xu, Ming Zhen, Yingli Bi Kaiji Zhen, Applied Catalysis A: General 198 (2000) S. 267 - 273). Die hier verwendeten nickelmodifizierten Hexaaluminate weisen eine größere Aktivität auf und zeigen eine bessere Stabilität gegenüber den herkömmlichen nickelhaltigen Katalysatoren, bei denen das Nickel auf den Trägermaterialien abgeschieden wird.

In einer Publikation von Yokata et al. wird die Verwendung von hexaaluminathaltigen Katalysatoren für die Synthesegasproduktion aus der Reformierung von Methan in Gegenwart von CO₂ und Dampf berichtet (O. Yokata, T. Tanaka, Z. Hou, T. Yashima; Stud. Surf. Sci. and Cat. 153 (2004) p. 141 - 144. Die Untersuchung betrifft nickel- und manganhaltige Hexaaluminate, wobei die manganhaltigen Hexaaluminate Elemente aus der Gruppe Ba, La und Sr sowie ein Gemisch aus Sr_{0,8} La_{0,2} aufweisen können. Die katalytische Charakterisierung der Katalysatoren erfolgt in der Gegenwart von CH₄/H₂O/CO₂ (im Volumenverhältnis von 150/100/50) unter atmosphärischem Druck bei einer Temperatur von 700 °C. Die Strömungsgeschwindigkeit beträgt 18000 hr⁻¹.

J. Wang et al. berichten über die Reformierung von Methan zu Synthesegas unter der Verwendung von Katalysatoren aus nickelhaltigen Magnetoplumbiten, die mit Kobalt dotiert sind beziehungsweise bei denen das Nickel vollständig durch Kobalt ersetzt wurde (J. Wang, Y. Liu, TX. Cheng, WX. Li, YL. Bi, KJ. Zhen, Appl. Catalysis A: General 250 (2003) p. 13 - 23). Die von Wang et al. offenbarten Katalysatoren werden durch die Summenformel LaNiₓCo₁₋ₓAl₁₁O₁₉. beschreiben, wobei auch eine kobalt-lanthanhaltiges Hexaaluminat mit x=0 offenbart wird, welches frei von Nickel ist. Die Herstellung der von Wang et al. offenbarten Katalysatoren basiert auf der Verwendung von Aluminiumnitratsalz, das gemeinsam mit den übrigen Metallnitratsalzen (d.h. La, Ni u Co beziehungsweise La und Co) in Gegenwart von PEG-Isopropylalkohol zersetzt wird. Die katalytischen Reformierungsuntersuchungen werden bei Temperaturen bis 800 °C und einer GHSV von 9600 hr⁻¹ durchgeführt. Der nickelfreie Hexaaluminatkatalysator mit der Zusammensetzung LaCoAl₁₁O₁₉ zeigt nur eine sehr geringe Aktivität hinsichtlich der untersuchten Konversion von Methan und CO₂. Generell lassen die Ergebnisse von Wang et al. erkennen, dass die katalytische Effizienz der Katalysatoren durch die Beimengung von Kobalt nachteilhaft beeinflusst wird.

In der US 7,442,669 B2 offenbaren D. Wickham et al. einen Oxidationskatalysator, der metallgetauschte Hexaaluminate umfasst. Der Katalysator weist eine gute katalytische Aktivität und Stabilität bei hohen Temperaturen auf, wobei die Aktivität auch über einen längeren Zeitraum erhalten wird. Im Allgemeinen weisen die Katalysatoren eine Eignung als Oxidationskatalysatoren auf und insbesondere bei der Methanverbrennung, wobei insbesondere die Verwendung in Turbinen von Bedeutung ist, die mit Erdgas betrieben werden. Die Synthese der hexaaluminathaltigen Katalysatoren basiert auf der Verwendung von Böhmitpartikeln.

Die in der US 7,442,669 B2 offenbarten Hexaaluminate enthalten bis zu drei unterschiedliche Metallspezies aus den Gruppen M₁, M₂ und M₃. Die Gruppe M₁ umfasst Elemente aus der Gruppe der Seltenen Erden, die Gruppe M₂ umfasst Elemente aus der Gruppe der Erdalkalielemente und die Gruppe M₃ umfasst Elemente aus der Gruppe der Übergansmetalle, wobei Mn, Fe, Co, Ni, Cu, Ag, Au, Rh, Ru, Pd, Ir und Pt genannt werden. Zur Charakterisierung der Katalysatoren wurden diese im Hinblick auf die Methanzersetzungsaktivität getestet, wobei die Katalysatoren einem Gasstrom mit 3 vol.-% Methan ausgesetzt wurden. Die Untersuchungen wurden bei einem Druck von 5 bar und einer GHSV von 17000 hr⁻¹ durchgeführt. Als Maß für die Effizienz der Katalysatoren wurde die Temperatur T_{1/2} ermittelt, die erforderlich ist um fünfzig Prozent des Methans umzusetzen. Die getesteten Katalysatoren wurden vor der katalytischen Untersuchung unterschiedlichen Alterungsprotokollen unterzogen.

Die EP 2 119 671 offenbart die Synthese von hexaaluminathaltigen Katalysatoren in Gegenwart von Templatmaterialien. Die Templatmaterialien sind von Vorteil für die Ausbildung von bestimmten Porenstrukturen bei den Hexaaluminaten, die mittels des erfindungsgemäßen Verfahrens gemäß der EP 2 119 671 hergestellt werden.

Eine große Anzahl der Publikationen bezieht sich auf die Verwendung von hexaaluminathaltigen Katalysatoren zur Oxidation beziehungsweise zur Partialoxidation von Kohlenwasserstoffen in Gegenwart von Sauerstoff. Bei der Durchführung der Partialoxidationen sind sehr kurze Kontaktzeiten erwünscht, um eine vollständige Oxidation der Kohlenwasserstoffe zu verhindern. Dazu ist es notwendig, die Reaktionen bei hohen Strömungsgeschwindigkeiten, einer niedrigen Kohlenwasserstoffkonzentration und in Gegenwart von Sauerstoff vorzunehmen. Als Beispiele für derartige Offenbarungen zu nennen sind: Kikuchi et al. (R. Kikuchi, Y. Iwasa, T. Takeguchi, K. Eguchi; Applied Catalyis A: General 281 (2005) p. 61 - 67), G. Groppi (Applied Catalysis A: General 104 (1993) p. 101 - 108.

Generell sind im Stand der Technik unterschiedliche Verfahren zur Herstellung von hexaaluminathaltigen Katalysatoren veröffentlicht worden, die jedoch alle dadurch gekennzeichnet sind, dass die entsprechenden Ausgangskomponenten einer thermischen Behandlung bei Temperaturen von 1200 °C und darüber unterzogen werden.

Beispielsweise beschreiben S. Nugroho et al. die Herstellung von phasenreinem Bariumhexaaluminat, das durch Tempern von Bariumoxid und Aluminiumoxid (d.h. BaO und Al₂O₃) mittels Festkörperreaktion (einer sogenannten Solid State Reaction) bei Temperaturen von 1450 °C erhalten wurde (siehe S. Nugroho et al., Journal of Alloys and Compounds, 2010, 502, S. 466-471).

M. Machida et al. (M. Machida et al, Journal of Catalysis, 1987, 103, S. 385 - 393) offenbaren die Herstellung von phasenreinen Bariumhexaaluminaten, die durch die Hydrolyse der entsprechenden Alkoxide erhalten werden, wobei diese bei Temperaturen bis 1300 °C behandelt werden. Die daraus resultierenden Hexaaluminatphasen verfügen über Oberflächen von 11 m²/g.

Chu et al. beschreiben eine Herstellung von Bariumhexaaluminaten durch Carbonatfällung (siehe W. Chu et al., Catalysis Letters, 2001, 74, S. 139-144). Bei der thermischen Behandlung waren Temperaturen von 1200 °C erforderlich, um die Materialien mit einer hohen Phasenreinheit in Bezug auf die Bariumhexaaluminatphase zu erhalten. Es wird berichtet, dass die Materialien Oberflächen von 17 m²/g aufweisen.

Davon abgesehen gibt es im Stand der Technik auch eine einzelne Offenbarung von F. Yin et al. zur Herstellung von Hexaaluminaten mittels der Verbrennung von Harnstoff (d.h. dem sogenannten Urea-Combustion-Verfahren), die von anderen Offenbarungen dahingehend abweicht, dass die thermische Behandlung der Ausgangsstoffe bei einer viel geringeren Temperatur erfolgt als bei den sonst bekannten Verfahren. F. Yin et al. geben an, dass das phasenreine Hexaaluminat-Material bereits bei 500 °C erhalten wurde. Das dabei erhaltene Material wies eine Oberfläche von 20 m²/g auf.

Die US2007/0111884 A1 (Laiyuan Chen et al und Delphi als Anmelder) offenbart und beansprucht Katalysatorträgermaterialien, die Hexaaluminate und Alumina umfassen und die mit Rhodium als Aktivkomponente versehen sind. Zur Herstellung des Katalysatormaterials werden die Ausgangsmaterialien mit einem stöchiometrischen Überschuss an aluminiumhaltiger Komponente in Verbindung gebracht, so dass bei der Synthese neben der hexaaluminathaltigen Phase auch die Alumina-Nebenphase gebildet wird. Es werden in der US2007/0111884 A1 Hexaaluminate offenbart, die unterschiedliche Kationen enthalten können, wobei auch lanthanhaltige Hexaamluminate genannt werden, die unterschiedliche zweiwertige Kationen wie Mg, Ca Ni, Co, Zn und Fe enthalten können. Zur Herstellung der Katalysatorträgermaterialien und Katalysatoren werden unterschiedliche Prozesse offenbart, die sich jeweils im Hinblick auf die verwendeten Mischschritte und die thermischen Behandlungsschritte voneinander unterscheiden. Die erfindungsgemäßen Katalysatoren, die gemäß Offenbarung allesamt mit Rhodium als Aktivmetall dotiert sind, werden in einem Verfahren zur Partialoxidation von Benzin in Gegenwart von Sauerstoff eingesetzt, das zur Herstellung eines wasserstoffreichen Gasgemisches dient. Bei den Partialoxidationsreaktionen, die zur Reformierung von Treibstoffen verwendet werden, können Temperaturen im Bereich von 1000 °C und höher auftreten und es ist aufgrund der hohen Temperaturen notwendig, hierfür besonders sinterbeständige Katalysatoren zu entwickeln.

In seiner Doktorarbeit behandelt Todd H. Gardner im Jahr 2007 in sehr grundlegender Weise die Verwendung von Hexaaluminaten als Katalysatoren für die Partialoxidation von Treibstoffen, die bei der Destillation in der mittleren Fraktion erhalten werden. Es werden insbesondere auch lanthanhaltige, bariumhaltige und strontiumhaltige Hexaaluminate beschrieben, die unterschiedliche Übergangsmetallkationen enthalten können. Den Schwerpunkt der Arbeit bildet die Untersuchung von Hexaaluminaten, die Nickel, Kobalt oder Eisen enthalten, wobei die Übergangsmetalle in unterschiedlichen Mengenverhältnissen vorliegen und mit den Kationen aus der Gruppe Sr, La oder Ba kombiniert werden, die ebenfalls in unterschiedlichen Mengenverhältnissen vorliegen. Die Arbeit ist gezielt auf eine Untersuchung von reinphasigen Hexaaluminaten gerichtet. Gardner berichtet, dass Phasenverunreinigungen zwar nicht ausgeschlossen sind, jedoch nur in sehr geringen Konzentrationen vorgelegen hätten. Zur Charakterisierung der katalytischen Eigenschaften wurden die Katalysatoren zur Partialoxidation von n-Tetradecan eingesetzt. Die Partialoxidationen wurden bei einem Druck von etwa 2 bar, einer GHSV von 50.000 h-¹ und unter Verwendung eines Sauerstoff-zu-Kohlenstoff-Verhältnisses (d.h. O zu C) von 1,2, durchgeführt.

In einer Publikation von J. Kirchnerova (in Catalysis Letters 67 (2000) p. 175 - 181) werden die Kriterien für das Design von neuen Hochtemperaturkatalysatoren zur Katalyse von Verbrennungsreaktionen beschreiben. Die Publikation bezieht sich auch auf die Herstellung und Testung von Materialen mit Perovskitstruktur und auf Materialien mit Hexaaluminatstruktur. Hierbei werden Hexaaluminate beschreiben, die Sr, La und Mn enthalten (d.h. die Strukturformel Sr₀₈La_{0,2}MnAl₁₁O₁₉. Zu erwähnen ist auch, dass die Verwendung von Böhmiten als Ausgangssubstanz bei der Synthese der Materialien offenbart wird. Eine Schlussfolgerung, die von Kircherova et al gezogen wird, ist, dass diejenigen Perovskite, die bestimmte Übergangsmetalle aufweisen, Aktivität bei der katalytischen Verbrennung aufweisen können. Die katalytischen Experimente zur Charakterisierung der Katalysatoren beziehen sich auf die Oxidation von Methan zu Kohlendioxid in Gegenwart von Luft, wobei der Methangehalt mit 2 % angegeben wird.

Die CN 101306361 A offenbart Hexaaluminate, die als Katalysatoren für die Durchführung von Reaktionen zur Oxidation von Kohlenwasserstoffen eingesetzt werden. Als stabilisierende Elemente weisen die Hexaaluminate die kationischen Spezies La, Ba oder Ca auf und als Übergangsmetallkationen können die Hexaaluminate Cr, Mn, Fe, Co, Ni oder Cu aufweisen.

Z.-L. Xu et al. offenbaren Hexaaluminate zur Katalyse von CO2-Reformierung von Methan zu Synthesegas (in Kao Ten Hsueh Hsiao Hua Heush Hsueh Pao/ Chemical Journal of Chinese Universities. Bd. 21, Nr. 2, (2000-02), S. 298 - 300, XP9510765, ISSN: 0251-0790. In der Veröffentlichung wird die Herstellung von phasenreinen Hexaaluminaten beschrieben, die unterschiedliche Übergangsmetalle aus der Gruppe Ni, Co, Fe, Mn und Cu aufweisen können. Während der katalytischen Testuntersuchungen wurden unterschiedliche Katalysatorproben in einem Quarzreaktor untersucht, wobei die nickelhaltigen Katalysatorproben bessere Aktivität aufwiesen als diejenigen Katalysatorproben, die andere Übergangsmetalle als Nickel enthielten. Die der Erfindung zugrunde liegende Aufgabe besteht in der Bereitstellung eines verbesserten katalytischen Verfahrens zur Reformierung von Kohlenwasserstoffen und CO₂ zu Synthesegas.

Die hier genannten und weitere Aufgaben werden dadurch gelöst, dass ein Verfahren zur Reformierung von Kohlenwasserstoffen, vorzugsweise Methan, und CO₂ bereitgestellt wird, bei dem ein hexaaluminathaltiger Katalysator eingesetzt wird. Nachfolgend werden zunächst Katalysatoren und Verfahren zur Herstellung von Katalysatoren beschrieben, die für das erfindungsgemäße Verfahren eingesetzt werden. Im Anschluss daran wird das erfindungsgemäße Verfahren zur Reformierung von Kohlenwasserstoffen in Gegenwart von Kohlendioxid näher dargestellt.

Bei dem erfindungsgemäßen Verfahren zur Reformierung von Kohlenwasserstoffen, vorzugsweise Methan, in Gegenwart von CO₂ wird ein hexaaluminathaltiger Katalysator eingesetzt, der dadurch gekennzeichnet ist, dass der Katalysator Kobalt und zumindest ein weiteres Element aus der Gruppe Ba, Sr, La enthält, wobei der hexaaluminathaltige Katalysator, der eine BET-Oberfläche größer als 2 m²/g aufweist, einen Co-Gehalt im Bereich von 2 - 15 mol-% aufweist, vorzugsweise 3 - 10 mol-% und weiter bevorzugt im Bereich von 4 - 8 mol-%, der Gehalt an dem zumindest einem weiteren Element aus der Gruppe Ba, Sr, La liegt in einem Bereich von 2 - 25 mol-%, vorzugsweise 3 -15 mol-%, weiter bevorzugt 4 - 10 mol-%, der Gehalt an Al liegt in einem Bereich von 70 - 90 mol-% und wobei der Katalysator oxidische Nebenphase im Bereich von 3 - 40 Gew.-% und weiter vorzugsweise im Bereich von 5 - 30 Gew.-% aufweist, die ausgewählt ist aus der Gruppe alpha-Aluminiumoxid, theta-Aluminiumoxid, LaAlO₃, BaAl₂O₄, SrAl₂O₄, CoAl₂O₄, La-stabilisiertes Aluminiumoxid und/oder La-stabilisiertes Aluminiumoxidhydroxid.

Anhand der hier gegebenen Bereichsangaben zu den molaren Anteilen lassen sich die folgenden molaren Verhältnisse für die Metallionenspezies bestimmen: Das molare Verhältnis von Co zu Al (d.h. das n_{Co}/n_{Al}-Verhältnis) liegt im Bereich von 0,03 - 0,17, vorzugsweise 0,043 - 0,11 und weiter bevorzugt von 0,057 - 0,08. Das molare Verhältnis von M^{BaSrLa} zu Al (d.h. das n_{MBaSrLa} /n_{Al}-Verhältnis) liegt im Bereich von 0,029 - 0,28, vorzugsweise 0,043 - 0,17 und weiter bevorzugt 0,057 - 0,11. Das molare Verhältnis von Co zu M^{BaSrLa} (d.h. das n_{Co}/n_{MBaSrLa}-Verhältnis) liegt im Bereich von 1,0 - 0,6, vorzugsweise von 1,0 - 0,67 und weiter vorzugsweise 1,0 - 0,8.

Darüber hinaus ist es besonders bevorzugt, dass die molaren Verhältnisse der im Katalysator enthaltenen Elemente in den nachfolgend genannten Bereichen liegen: Das Verhältnis von Kobalt zu Aluminium (d.h. das n_{Co}/n_{Al}-Verhältnis) im Bereich von 0,05 bis 0,09 und besonders bevorzugt im Bereich von 0,06 bis 0,08 liegt. In einer bevorzugten Ausgestaltung des eingesetzten Katalysators liegt das molare Verhältnis von M^{BaSrLa} zu Aluminium (d.h. das n_{MBaSrLa} /n_{Al}-Verhältnis) in einem Bereich von 0,09 bis 0,25, besonders bevorzugt im Bereich von 0,092 bis 0,20. Des Weiteren bevorzugt liegt das molare Verhältnis von Co zu M^{BaSrLa} (d.h. das n_{Co}/n_{MBasrLa}-Verhältnis) im Bereich von 1,0 bis 0,3 und besonders bevorzugt im Bereich von 0,85 bis 0,40.

Ein Material, das vollständig aus Kobalthexaaluminat besteht und das zumindest ein Element aus der Gruppe Ba, Sr, La enthält kann durch die Summenformel CoM^{BaSrLa}Al₁₁O₁₉ beschrieben werden. In diesem Fall weisen die metallischen Spezies die folgenden stöchiometrischen Verhältnisse auf: Das molare Verhältnis von Co zu Al (d.h. das n_{Co}/n_{Al}-Verhältnis) beträgt 1, das molare Verhältnis von M^{BaSrLa} zu Al (d.h. das n_{MBaSrLa} /n_{Al}-Verhältnis) beträgt 0,091 und das molare Verhältnis von Co zu M^{BaSrLa} (d.h. das n_{Co}/n_{MBaSrLa}-Verhältnis) beträgt 1.

Ein Vergleich der Zusammensetzung des Katalysators, der bei dem erfindungsgemäßen Verfahren zur Reformierung von Kohlenwasserstoffen in Gegenwart von CO₂ eingesetzt wird, mit einem Material, dass vollständig aus Kobalthexaaluminatphase besteht, ergibt, dass der Katalysator gegenüber dem reinphasigen Kobalthexaaluminat (vorzugsweise) einen geringeren Anteil an Kobalt (in Bezug auf Aluminium) und einen höheren Anteil an kationischer Spezies aus der Gruppe Ba, Sr, La (in Bezug auf Kobalt) aufweist. In Bezug auf das reinphasige Kobalthexaaluminat bedeutet dies, dass der Katalysator eine unterstöchiometrische Menge an Kobalt und eine überstöchiometrische Menge an kationischer Spezies aus der Gruppe Ba, Sr, La aufweist.

Eine Erläuterung zur Bildung des Katalysators ist, dass die dem Synthesesystem zugesetzten kobalthaltigen Spezies nahezu vollständig beziehungsweise vollständig in die Struktur der Kobalthexaaluminatphase eingebaut werden und für die Bildung der Nebenphase kein Kobalt mehr zur Verfügung steht. Die Bildung der Nebenphase erfolgt aus den aluminiumhaltigen Spezies und den jeweils eingesetzten kationischen Spezies aus der Gruppe Ba, Sr, La, was dazu führt, dass sich als Nebenphase zum überwiegenden Teil Aluminate beziehungsweise Perovskite (z.B. SrAl₂O4, LaAlO₃ etc.) oder andere dem Fachmann bekannte Phasen der Elemente La, Sr, Ba, Al bilden. Daraus folgt, dass der Anteil an freiem Aluminiumoxid und die damit verbundene Anzahl an Lewis-aziden-Zentren minimiert werden kann. Die oben gegeben Erläuterung soll die Erfindung jedoch in keiner Weise einschränken.

In einer bevorzugten Ausführungsform enthält der Katalysator zumindest einen edelmetallhaltigen Promotor aus der Gruppe Pt, Rh, Pd, Ir wobei der Anteil an edelmetallhaltigen Promotoren im Bereich von 0,1 - 3 mol-% liegt.

In einer weiteren Ausführungsform umfasst der Katalysator auch einen Anteil an weitere Kationen, die vorzugsweise aus der Gruppe Mg, Ca, Ga, Be, Ni, Fe, Cr, Mn ausgewählt sind, wobei Mg besonders bevorzugt ist.

Es ist auch denkbar, dass als Alternative zu dem zumindest einem Element aus der Gruppe Ba, Sr, La auch noch ein Element oder mehrere Elemente aus der Gruppe der Lanthanoide in dem eingesetzten Katalysator vorliegen können. Es ist auch nicht auszuschließen, dass die Leistungseigenschaften des Katalysators durch den Einbau von speziellen Nebenphasen beziehungsweise die Kombination von Nebenphasen innerhalb des Katalysators noch weiter gesteigert werden können.

Verfahren zur Herstellung eines hexaaluminathaltigen Katalysators, der bei dem erfindungsgemäßen Verfahren zur Reformierung von Kohlenwasserstoffen in Gegenwart von Kohlendioxid eingesetzt wird, wobei der hexaaluminathaltige Katalysator dadurch gekennzeichnet ist, dass dieser durch nachfolgend genannte Schritte herstellbar ist:
(i) Bereitstellung einer Aluminiumquelle, vorzugsweise einer feinteiligen Aluminiumoxid und/oder -hydroxid Modifikation,
(ii) Inkontaktbringen der feinteiligen Aluminiumquelle, mit einer aufschmelzbaren beziehungsweise löslichen kobalthaltigen Verbindung und zumindest einem weiteren auflösbarem oder aufschmelzbarem Metallsalz,
(iii) innige Durchmischung der Aluminiumquelle und des gelösten beziehungsweise aufgeschmolzenen Metallsalzes,
(iv) Trocknung des Gemisches,
(v) Tieftemperaturkalzinierung des Gemisches,
(vi) Abformung beziehungsweise Formgebung,
(vii) Hochtemperaturkalzinierung des Gemisches.

Das zumindest eine weitere auflösbare oder aufschmelzbare Metallsalz umfasst ein Metallsalz, das ausgewählt ist aus der Gruppe Barium, Strontium und Lanthan.

In einer bevorzugten Ausführungsform umfasst das weitere auflösbare Metallsalz zumindest zwei Metallsalze, bei denen zumindest bariumhaltige Spezies in Verbindung mit strontiumhaltigen Spezies oder zumindest bariumhaltigen Spezies in Verbindung mit lanthanhaltigen Spezies oder strontiumhaltige Spezies in Verbindung mit lanthanhaltigen Spezies vorliegen.

Für den Fall, dass die Metallsalze bei der Durchmischung in Schritt (iii) nicht in Form der Schmelze sondern in Form der gelösten Metallsalze vorliegen, so wird den Metallsalzen auch ein Lösemittel zugesetzt, sofern diese nicht im gelösten Zustand eingesetzt wurden.

In einer besonders bevorzugten Ausführungsform wird die Aluminiumquelle aus der Gruppe der hochreaktiven Aluminiumoxide und -hydroxide ausgewählt. Vorzugsweise enthält die Aluminiumquelle dispergierbare Primärpartikel, wobei eine Primärpartikelgröße kleiner gleich 500 nm bevorzugt ist.

Verfahren zur Herstellung des hexaaluminathaltigen Katalysators, der für das erfindungsgemäße Verfahren zur Reformierung von Kohlenwasserstoffen in Gegenwart von Kohlendioxid eingesetzt wird.

Hexaaluminathaltiger Katalysator / Hexaaluminatphase

Im Rahmen der vorliegenden Offenbarung umfasst der Begriff hexaaluminathaltiger Katalysator Materialien, die durch einen hohen Anteil an Hexaaluminatphase gekennzeichnet sind. Dies bedeutet, dass der hexaaluminathaltige Katalysator, der beim erfindungsgemäßen Verfahren eingesetzt wird, Nebenphasen enthält. Der Begriff Hexaaluminatphase umfasst Phasen, die Schichtstrukturen aufweisen, die ähnlich oder gleich den Typen der Magnetoplumbitstruktur und/oder der beta-Aluminatstruktur - wie beta'- oder beta"-Aluminatstruktur - sind. Der Anteil an Nebenphase liegt in einem Bereich von 3 - 40 Gew.-% und weiter vorzugsweise in einem Bereich von 5 - 30 Gew.-%.

Die Bestimmung des Anteils an hexaaluminathaltiger Phase kann über diffraktometrische Methoden wie beispielsweise die Rietfeldverfeinerung erfolgen. Beim Vorliegen von besonders feinteiligen oder nanokristallinen Materialien erfolgt die Bestimmung des Anteils an Hexaaluminatphase durch eine optische Analyse nach Kubelka-Munk. Hierbei wird eine hochgesinterte Referenzprobe mit derselben Stöchiometrie wie die zu messende Probe (in Bezug auf den Anteil an kristalliner Phase) hergestellt und diese dann als Standardprobe festgelegt. Die zu messenden Proben werden gegen die Standardprobe als Referenz verglichen, wobei der Referenz zuvor ein Wert von hundert Prozent zugeordnet wurde. Die optische Analysenmethode ist bei nanokristallinen Materialien dann bevorzugt, wenn diese sehr kleine Kristallite mit geringer Kohärenzlänge aufweisen. Geringe Kohärenzlängen liegen (bei diffraktometrischen Untersuchungen mit einer Röntgenwellenlänge von 0,154 nm) insbesondere dann vor, wenn die Kristallitgrößen kleiner 0,5 nm, vorzugsweise kleiner 0,4 und weiter vorzugsweise kleiner 0,3 nm sind. Solche nanokristallinen Materialien können derartig beschaffen sein, dass sie in der Pulverdiffraktometrie als röntgenamorph und in der UV-Anlayse als kristallin erscheinen.

### Aluminiumquelle

Als Aluminiumquelle können prinzipiell alle aluminiumhaltigen Ausgangsstoffe eingesetzt werden, wobei eine bevorzugte Aluminiumquelle ausgewählt wird aus der Gruppe: Pseudoböhmit, Böhmit, Gibbsit, Bayerite , gamma Aluminiumoxid, theta Aluminiumoxid, Hydrotalcite wie Magnesiumhydrotalcit, kolloidale basische Aluminiumoxide und andere dem Fachmann bekannte kolloidale Alumniumquellen sowie Mischungen aus diesen. Insbesondere mit eingeschlossen sind unter anderem folgende Produkte der Firma Sasol: Disperal und alle Disperaltypen, Dispal, Pural, Puralox, Catalox, Catapal sowie auch alle Pural MG Typen.

Ohne eine Einschränkung des Verfahrens zur Herstellung eines Katalysatormaterials, das Bestandteil des erfindungsgemäßen Verfahrens ist, durch eine Theorie vorzunehmen, wird angenommen, dass die Oberflächenstruktur der hochreaktiven Aluminiumoxid oder -Hydroxidquelle wie beispielsweise theta Aluminiumoxid, gamma Aluminiumoxid, Pseudoböhmit, Böhmit, Gibbsit, Bayerit und Mischungen der vorgenannten und andere hochreaktiven Aluminiumoxid oder - Hydroxidquelle einen wesentlichen Einfluss auf die Bildung eines aktiven Katalysators haben könnte. Vorzugsweise besteht das eingesetzte Böhmit aus dispergierbaren Partikeln, vorzugsweise ist die Primärpartikelgröße im Bereich kleiner oder gleich 500 nm. Der Begriff dispergierbare Partikel bedeutet, dass sich die in Wasser dispergierten beziehungsweise aufgeschlämmten Partikel eine stabile Dispersion bilden und sich erst nach langer Zeit auf dem Boden abscheiden.

Vorzugsweise handelt es sich bei der Aluminiumquelle um einen nanopartikulären aluminiumhaltigen Ausgangsstoff beziehungsweise kolloidale Primärpartikel. Als nanopartikulären aluminiumhaltigen Ausgangsstoffe können beispielsweise peptidisierte Aluminiumhydroxide, - oxidhydrate oder -oxide eingesetzt werden. Die Peptidisierung kann mittels organischer Säuren, beispielsweise Essigsäure, Propionsäure, oder mittels anorganischer Säuren, beispielsweise Salpetersäure oder Salzsäure, vorgenommen werden. Die kolloidalen Partikel können mittels Stabilisatoren wie Tensiden, löslichen Polymeren oder Salzen versetzt sein beziehungsweise können derartige Stabilisatoren im Herstellungsverfahren eingesetzt werden. Die kolloidalen Primärpartikel können auch aus partiell hydrolysierten Alkoholaten bestehen.

In einer speziellen Ausführungsform können auch Formkörper der vorgenannten Aluminiumoxidquellen eingesetzt werden, die dann in Kontakt mit den Metallverbindungen gebracht werden. Beispiele für solche Formkörper können unter anderem Tabletten, Stranggut oder Granulate oder andere dem Fachmann bekannte Formkörper sein.

Der Einsatz einer hochreaktiven Aluminiumoxid oder -Hydroxidquelle erweist sich insofern als besonders vorteilhaft, da so die Bildung erwünschter Phasen erleichtert wird.

Als Metallverbindungen werden jene Verbindungen bevorzugt eingesetzt, die in Lösungsmitteln löslich oder im Temperaturbereich bis 250 °C aufschmelzbar sind, und die kostengünstig und großtechnisch verfügbar sind. Zu den bevorzugt eingesetzten Lösungsmitteln zählen unter anderem folgende: Wasser, saure oder alkalische wässrige Lösungen, Alkohole wie Methanol, Ethanol, Propanol, iso-Propanol, Butanol, Ketone wie Aceton oder Methylethylketon, aromatische Lösungsmittel wie Toluol oder Xylole, aliphatische Lösungsmittel wie Cyclohexan oder n-Hexan, Ether und Polyether wie Tetrahydrofuran, Di-Ethylether oder Di-Glyme, Ester wie Methylacetat oder Ethylacetat.

Als Metallverbindungen sind weiterhin besonders bevorzugt lösliche Salze, Komplexverbindungen oder metallorganische Verbindungen. Bespiele für Salze sind unter anderem Nitrate, Nitrite, Carbonate, Halogenide, Acetate, Octanoate. Beispiel für Komplexverbindungen sind unter anderem EDTA-Komplexe, Komplexe mit Aminosäure oder Aminen, Komplexe mit Polyolen oder Polysäuren, Komplexe mit Phosphanen. Beispiele für metallorganische Verbindungen sind unter anderem Acetylacetonate, Alkoholate, Alkylverbindungen, Verbindungen mit Aromaten wie Cyclopentadienyladdukte.

Als aufschmelzbaren Metallverbindungen werden vorzugsweise Metallsalze eingesetzt, die sich während des Aufschmelzens nicht zersetzen, oder bei denen die Zersetzung kinetisch stark gehemmt ist. Beispiele für solche Metallsalze sind unter anderem Nitrate, Nitrite, Halogenide, Chlorate, Bromate, lodate, Sulfate, Sulfite. Besonders bevorzugt sind Nitrate, Nitrite oder Salzschmelzen, die Nitrate und Nitrite enthalten.

Geeignete Methoden zum Inkontaktbringen der Metallverbindungen mit der Aluminiumquelle sind unter anderem Imprägnierverfahren, bei denen die Metallverbindungen in geeigneten Lösungsmitteln gelöst werden, die anschließend durch eine Trocknung entfernt werden. Ein solcher Trocknungsschritt kann bei pulverförmig vorliegender Aluminiumquelle durch beispielsweise durch Gefrier- oder Sprühtrocknung vorgenommen werden, alternativ kann auch Sprühgranulation erfolgen oder reine statische Trocknung der entstehenden Komposite erfolgen. Im Rahmen der Erfindung ist insbesondere die Imprägnierung ein bevorzugtes Verfahren.

Weitere geeignete Verfahren zum Inkontaktbringen sind unter anderem eine Verknetung oder Mahlung der Aluminiumquelle in Gegenwart der Metallverbindungen mit oder ohne Zugabe von Flüssigkeiten. Insbesondere die Verknetung ist im Rahmen der Erfindung ein bevorzugtes Verfahren, da sie eine Kopplung mit einer nachfolgenden Extrusion erlaubt und somit für die Formgebung von Vorteil sein kann.

Im Rahmen der Erfindung werden insbesondere solche Metallsalze bevorzugt, die die Ausbildung der Hexaaluminatphase in der Gegenwart von Kobalt erleichtern.

Solche sind unter anderem Lanthan, Barium und Strontium. Lanthan, Barium und Strontium werden dabei als sogenannte Zwischenebenenkationen eingebaut. Erfindungsgemäß ist die Verwendung eines oder mehrerer dieser Kationen eingeschlossen. Dabei können sowohl Materialien entstehen, die unterschiedliche Kationen in die Zwischenebene einbauen (Mischkristallbildung, d.h. einzelne Kristallite die beispielsweise sowohl Strontium als auch Barium in den Zwischenebenen einbauen), als auch solche, bei denen sich nur jeweils Kristallite mit einer Sorte von Kationenspezies in der Zwischenebene bilden und dann jedoch als Mischung von Kristalliten mit jeweils unterschiedlichen Sorten von Kationenspezies vorliegen (d.h. beispielsweise eine Kristallmischung aus Kristalliten, die nur Barium als Zwischenebenenkationen aufweisen, mit Kristalliten, die nur Strontium als Zwischenebenenkationen aufweisen). Erfindungsgemäß sind beide Typen der Mischung (d.h. Mischkristalle und Kristallmischung) miteingeschlossen.

Weitere Kationen, die im Rahmen der Erfindung bevorzugt sind, sind solche, die wie das Kobalt ebenfalls in die Spinellblöcke mit einbauen. Bevorzugt sind unter anderem Magnesium, Calcium, Gallium, Beryllium, Nickel, Eisen, Chrom, Mangan. Besonders bevorzugt ist Magnesium.

Völlig überraschend wurde gefunden, dass gerade auch die Durchführung der Hochtemperaturkalzinierung bei relativ niedrigen Temperaturen im Temperaturbereich von 800 °C bis 1300 °C, vorzugsweise im Temperaturbereich von 850 °C bis 1200 °C, insbesondere bevorzugt in einem Temperaturbereich von 900 °C zu 1100 °C, zu Katalysatoren führt, die sehr gute katalytische Leistungseigenschaften in Bezug auf das erfindungsgemäße Verfahren zur Herstellung von Synthesegas aufweisen.

Für die Hochtemperaturkalzinierung und die Herstellung des Katalysators wurde somit ein vorteilhaftes Temperaturfenster aufgefunden, das einen Synergieeffekt bildet zwischen den Leistungseigenschaften der erfindungsgemäßen Materialien im Hinblick auf die Synthesegasherstellung und der besonders hohen Energieeffizienz beim Herstellungsverfahren des Katalysators.

Besonders bevorzugt ist die Durchführung des Herstellungsverfahrens des Katalysators beziehungsweise des Katalysatorvorläufermaterials in Gegenwart von Impfkristallen. Besonders bevorzugt werden Impfkristalle eingesetzt, die Hexaaluminatstruktur oder eine ähnliche Zusammensetzung wie die Zielphase aufweisen. Ganz besonders bevorzugt weisen die Impfkristalle eine hohe Kristallinität auf. Besonders bevorzugt ist die Durchführung des Herstellungsverfahrens des Katalysators beziehungsweise des Katalysatorvorläufermaterials in Gegenwart von Impfkristallen.

Ein möglicher Effekt, der durch die Zugabe der Impfkristalle erreicht werden kann, besteht in der Absenkung der Bildungstemperatur der Hexaaluminatphase bei der Durchführung des erfindungsgemäßen Verfahrens beziehungsweise in einer Erhöhung der Ausbeute an hexaaluminathaltiger Phase. Nicht ausgeschlossen ist auch, dass sowohl die Bildungstemperatur abgesenkt und gleichzeitig die Ausbeute erhöht wird. Ein weiterer vorteilhafter Effekt in Verbindung mit der Zugabe von Impfkristallen besteht auch in einer möglichen Verkürzung der Kristallisationszeit.

In Bezug auf die Impfkristalle ist zu sagen, dass diese in einer bevorzugten Ausführungsform des Verfahrens aus einem Material mit Hexaaluminatphase - dem Zielprodukt - bestehen, weiter bevorzugt aus phasenreinem Hexaaluminat. Darüber hinaus ist es auch bevorzugt, wenn die Impfkristalle eine geringe Korngröße mit einer hohen spezifischen Oberfläche aufweisen, beziehungsweise aus Agglomeraten mit geringer Kristallitgröße und einer hohen spezifischen Oberfläche bestehen.

Impfkristalle lassen sich dadurch aus einem entsprechenden Hexaaluminatmaterial herstellen, dass dieses einer geeigneten mechanischen und/oder chemischen Behandlung unterzogen wird, wie beispielsweise einer Mahlung im trockenen Zustand, Mahlung in Gegenwart von Wasser oder Mahlung in Gegenwart von Säuren oder Basen.

In einer besonders bevorzugten Ausführungsform werden die Impfkristalle durch intensive Vermengung mit der Aluminiumquelle in Kontakt gebracht. Diese Vermengung kann durch Aufmahlen, Kneten, Kollern oder andere dem Fachmann bekannte Methoden erfolgen. Die Vermengung der Aluminumquelle mit den Impfkristallen kann vor, während oder nach dem Inkontaktbringen mit der Kobalt-haltigen und der zumindest einen Metallverbindung erfolgen.

Die Aluminiumoxidquelle kann zum einen in der Form eines Feststoffs wie Pulver oder Granulat und zum anderen in flüssiger Form bereitgestellt werden. Falls die Aluminiumoxidquelle in flüssiger Form vorliegt, so ist es bevorzugt, dass die aluminiumhaltigen Spezies in dem Lösungsmittel dispergiert sind - beziehungsweise in diesem als kolloidale Partikel vorliegen. Die Stabilität der kolloidalen Aluminas beziehungsweise auch die Bildung der kolloidalen Aluminas lässt sich dadurch verbessern, dass ein pH-Wert gewählt wird, der entweder im Bereich von 2 bis 4,5 oder im Bereich von 8 bis 12,5 liegt. Geeignete Agentien zur Herstellung oder Stabilisierung der kolloidalen Aluminas sind Säuren wie HNO₃, Essigsäure oder Ameisensäure oder Basen wie beispielsweise wässrige NaOH-, KOH- oder Ammoniaklösung.

In einer bevorzugten Ausführungsform des Verfahrens wird eine kolloidale Aluminalösung eingesetzt, die peptidisierte Aluminapartikel aufweist und deren pH-Wert im Bereich von 2 bis 4,5 liegt.

Die Aluminiumquelle wird mit zumindest einer Metallverbindung in Kontakt gebracht. Bei der Zugabe zu der als Flüssigkeit vorliegenden Aluminiumquelle wird insbesondere darauf geachtet, dass keine Ausfällung der Metallverbindungen oder der Kolloide zu beobachten ist. Die Zugabe der Impfkristalle kann vor, während oder nach der Zugabe der Metallverbindungen geschehen. Alternativ können die Impfkristalle auch nach dem Trocknungsschritt zugegeben werden.

In einer weiteren bevorzugten Ausführungsform des Verfahrens wird eine dispergierbare nanopartikuläre Aluminiumoxidquelle als feinteiliges Pulver eingesetzt. Das feinteilige Pulver besteht aus Primärpartikeln kleiner gleich 500 nm, welche als Agglomerate mit einem D₅₀-Wert von 1 bis 100 µm vorliegen.

Die Aluminiumquelle wird in dieser bevorzugten Ausführungsform mit zumindest einer Metallverbindung in Kontakt gebracht. Die Metallverbindung kann entweder als Lösung oder als Feststoff zugegeben werden. Im Fall eines Feststoffs wird anschließend eine Flüssigkeit zugegeben. Bei der Zugabe der Lösung beziehungsweise der Flüssigkeit wird insbesondere darauf geachtet, dass eine homogene, teigförmige Masse entsteht, die knetbar ist und die sich durch eine sehr innige Vermischung der Aluminiumoxidquelle und der Metallverbindung auszeichnet. Die Zugabe der Impfkristalle kann vor oder nach der Zugabe der Metallverbindungen geschehen. Ein wesentliches Merkmal dieser bevorzugten Ausführungsform beruht darin, dass der Trocknung (d.h. dem Schritt (iv)) die Extrusion als Formgebungsschritt (d.h. Schritt (vi)) vorgeschaltet ist.

In einer anderen bevorzugten Ausführungsform des erfindungsgemäßen Verfahrens wird das feinteilige Pulver der Aluminiumquelle mit zumindest einer aufschmelzbaren Metallverbindung in Kontakt gebracht. Die innige Durchmischung der Aluminiumoxidquelle und der aufschmelzbaren Metallverbindung wird bei einer Temperatur im Bereich von 25°C bis 250°C durchgeführt. Bei der Wahl der Temperatur wird insbesondere darauf geachtet, dass diese über dem Schmelzpunkt der Metallverbindung liegt. Durch das Aufschmelzen der Metallverbindung wird eine besonders homogene Verteilung der Komponenten im Gemisch erreicht. Die Zugabe der Impfkristalle kann vor, während oder nach der Zugabe der Metallverbindungen geschehen. Alternativ können die Impfkristalle auch erst nach dem Abkühlen des Gemischs zugegeben werden.

Die Tieftemperaturkalzinierung des getrockneten Gemisches beziehungsweise des abgeformten und getrockneten Materials, das nach den oben genannten Verfahrensschritten erhalten wird, dient grundsätzlich dazu, die Anionen aus der eingesetzten Metallverbindungen zu entfernen und diese in die entsprechenden Metalloxide umzuwandeln. Die Temperatur bei der Kalzinierung hängt von den eingesetzten Metallverbindungen ab, vorzugsweise ist die Temperatur kleiner gleich 550 °C und weiter bevorzugt im Temperaturbereich von 150°C bis 550 °C.

Die Hochtemperaturkalzinierung des abgeformten und getrockneten Gemisches beziehungsweise des Tieftemperaturkalzinierten Gemisches erhalten nach oben genannten Verfahrensschritten ist ein wesentlicher Prozessschritt bei der Herstellung des Katalysators. Die Temperatur bei der Hochtemperaturkalzinierung muss höher sein als 800 °C, vorzugsweise ist die Temperatur gleich oder höher als 850 °C und weiter bevorzugt ist die Temperatur gleich oder höher als 900 °C.

Darüber hinaus ist es von Bedeutung, die Kalzinierung über eine Zeitdauer durchzuführen, die größer ist als 0,5 Stunden, weiter vorzugsweise größer als 1 Stunde und insbesondere vorzuziehen ist eine Zeitdauer größer als 12 Stunden.

In einer weiteren bevorzugten Ausführungsform des erfindungsgemäßen Verfahrens können die Tieftemperaturkalzinierung (v) und Hochtemperaturkalzinierungsschritte (vii) in einem zusammenhängenden Prozessschritt durchgeführt werden. Dies ist besonders vorteilhaft, wenn dem Trocknungsschritt ein Formgebungsschritt vorgeschaltet ist.

Falls bei der Kalzinierung die Zieltemperatur von 800 °C unterschritten wird, so wird eine Herstellung des Katalysators negativ beeinträchtigt, da die Bildung von Hexaaluminat fehlschlägt beziehungsweise ein zu geringer Anteil an Hexaaluminat gebildet wird. Wird eine Kalzinierungstemperatur gewählt, die oberhalb des geeigneten Temperaturbereichs liegt, so werden zwar Phasen gebildet, die eine gewisse katalytische Aktivität besitzen, jedoch weisen die Materialien eine zu geringe Oberfläche auf. Die obere Grenze bei der Kalzinierung für die Kalzinierungstemperatur liegt bei 1500 °C, vorzugsweise bei 1450 °C und weiter vorzugsweise bei 1400 °C.

Es ist denkbar, dass die Erfindung durch die Angabe von speziellen Kalzinierungsbedingungen weiter spezifiziert werden könnte. Im großtechnischen Betrieb ist jedoch eine sehr lange Zeitdauer für die Kalzinierung unwirtschaftlich und unerwünscht.

Für die spezielle Applikation des Materials als Katalysator zur Herstellung von Synthesegas ist eine hohe spezifische Oberfläche förderlich. Im Rahmen der Erfindung werden Materialien mit Oberflächen größer als 2 m²/g eingesetzt, besonders bevorzugt sind Materialien mit Oberflächen größer als 4 m²/g, ganz besonders bevorzugt Materialien mit Oberflächen größer als 8 m²/g, ganz besonders bevorzugt sind Materialien mit Oberflächen größer als 15 m²/g.

Ein Formgebungsprozess ist für die Herstellung des Katalysators von Bedeutung, damit der Katalysator in geeigneter Weise einem Rohrreaktor eingesetzt werden kann. Dies hängt auch damit zusammen, dass das Böhmit, welches besonders bevorzugt Aluminiumoxidquelle eingesetzt wird, vorzugsweise besonders feinteilig ist, vorzugsweise ist die Primärpartikelgröße im Bereich von 10 bis 500 nm. Die direkte Einbringung eines sehr feinteiligen Katalysators, der aus einem feinteiligen Pulver hergestellt wurde, in einen Rohrreaktor würde zu einem hohen Druckverlust beziehungsweise zur vollständigen Verstopfung des Reaktors führen, wodurch das katalytische Reformierungsverfahren beeinträchtigt wird.

Das nach dem Verfahren hergestellte Material kann bei der Reformierung zur Herstellung von Synthesegas in der Form von Schüttgut, Tabletten oder Stranggut eingesetzt werden. Die Wahl der geeigneten Katalysatorform richtet sich nach den jeweils vorliegenden Prozessbedingungen, die für die Herstellung des Synthesegases von Bedeutung sind.

Die Formgebung wird üblicherweise nach den Prozessschritten (iii) oder (v) durchgeführt, kann aber auch nach Prozessschritt (vii) vorgenommen werden.

Die Herstellung eines Tablettenformkörpers erfolgt durch die Schritte (x.1) Kompaktierung, (x.2) Siebung und (x.3) Tablettierung. Dem für die Kompaktierung und Tablettierung eingesetzten Katalysatormaterial beziehungsweise Vorläufermaterial können Binder und Schmiermittel zugesetzt werden. Als Schmiermittel können beispielsweise Graphit oder Stearinsäure verwendet werden. Vorzugsweise wird Graphit eingesetzt. Die Menge an Schmiermittel beträgt üblicherweise nicht mehr als 10 Gew.-% bezogen auf das Katalysatormaterial.

Darüber ist es auch möglich, die Zielfraktion mittels einer Kompaktierungsmaschine herzustellen, die gleich mehrere Schritte hintereinander vornimmt. Das mit der Kompaktierungsmaschine hergestellte Schüttgut kann möglicherweise eine geringere mechanische Stabilität aufweisen als das mit der Pressmaschine hergestellte Material.

Darüber ist es auch möglich, dass ein Formkörper mittels eines Extrusionsschrittes hergestellt wird. Eine solche Extrusion kann nach Schritt (ii) oder Schritt (iii) der Herstellung erfolgen.

Davon abgesehen ist es jedoch auch möglich, dass die Suspension mittels eines Sprühtrockners getrocknet wird und nachfolgend einem Kalzinierungsprozess unterzogen wird.

Als Bindermaterial zur Kompaktierung und Tablettierung können dem Katalysator ein Oxid oder mehrere Oxide zugesetzt werden oder bestimmte Oxide durch spezielle Verfahrensmerkmale oder Prozessschritte während der Synthese des Materialies gebildet werden. Derartige Verfahrensmerkmale oder Prozessschritte können unter anderem sein: bevorzugte Wahl der Stöchiometrie der Ausgangsverbindungen, bevorzugte Wahl der Art der Ausgangsverbindungen und insbesondere der Aluminiumquelle, bevorzugte Wahl der thermischen Behandlungsschritte. Ein besonders geeignetes Bindermateriales wirkt sich positiv auf die Ausbildung einer hohen Oberfläche des Katalysators aus.

Beispiele für solche Oxide, die sich aus dem Bindermaterial während der Kalzinierung bilden und die besonders bevorzugte Nebenphasen darstellen, sind unter anderem: theta-Aluminiumoxid, alpha-Aluminiumoxid, Lanthanaluminat (LaAlO₃), Bariumaluminat (BaAl₂O₄), Strontiumaluminat (SrAl₂O₄) La-stabilisiertes Aluminiumoxid, La-stabilisiertes Aluminiumoxidhydroxid.

In einer weiteren Ausführungsform ist es beispielsweise möglich, den Katalysator beziehungsweise das Katalysatorvorläufermaterial durch einen Beschichtungsprozess auf ein keramisches Trägermaterial aufzuziehen. Als Trägermaterial könnte ein keramischer Wabenkörper oder andere Formkörper verwendet werden.

Zur Herstellung eines besonders wirksamen Katalysators ist es erforderlich, dass die Stöchiometrie der Elemente, die das Katalysatormaterial bilden, in einem bestimmten Vorzugsbereich liegt.

Im Rahmen der vorliegenden Abhandlung wird der Vorzugsbereich der Zusammensetzung jeweils auf die metallischen Elemente bezogen und auf Basis von Molprozent angegeben. Die Zahlen sind auf hundert Anteile zu ergänzen, wobei das Vorliegen von Sauerstoff nicht mitberücksichtigt wird.

Bevorzugt ist im Rahmen der Erfindung ein hexaaluminathaltiges Material, dessen Kobaltgehalt vorzugsweise in einem Bereich von 2 - 15 mol-%, besonders bevorzugt in einem Bereich von 3 - 10 mol-%, insbesondere bevorzugt in einem Bereich von 4 - 8 mol-%.

Bevorzugt ist im Rahmen der Erfindung ein hexaaluminathaltiges Material, das zumindest eine Metallspezies aufweist, welche neben Kobalt vorliegt und welche ausgewählt ist aus der Gruppe Barium, Strontium und Lanthan, wobei der Metallgehalt dieser zumindest einen Metallspezies vorzugsweise in einem Bereich von 2 - 25-mol-%, weiter vorzugsweise in einem Bereich von 3 - 15 mol-% und insbesondere bevorzugt in einem Bereich von 4 - 10 mol-% liegt.

Weitere Promotoren wie beispielsweise Magnesium, Gallium, Nickel werden im Rahmen der Erfindung bevorzugt mit weniger als 10 mol-% zu dem Material hinzugegeben.

Nachfolgend werden einige Beispiele für diejenigen Materialien aufgeführt, die eine bevorzugte Zusammensetzung aufweisen:
Ein besonders bevorzugtes Material weist eine Zusammensetzung auf, bei der der La-Gehalt im Bereich von 3 - 20 mol-%, der Co-Gehalt im Bereich von 2 - 10 mol-%, der Gehalt an edelmetallhaltigem Promotor beziehungsweise zusätzlichem Promotor im Bereich von 0,25 - 3 mol-% und der Al-Gehalt im Bereich 70 - 90 mol-% liegt.

Ein weiteres Beispiel für ein Material, das gemäß der Erfindung bevorzugt ist, weist eine Zusammensetzung auf, bei der der Gehalt an La und/oder Ba im Bereich von 3 - 20 mol-%, der Gehalt an Co im Bereich von 2 - 10 mol-%, der Gehalt an edelmetallhaltigem Promotor im Bereich von 0,1 - 3 mol-% und der Gehalt an Aluminium im Bereich von 70 - 90 mol-% liegt.

Ganz besonders bevorzugt ist ein Material mit einer Zusammensetzung, bei der der Gehalt an La und/oder Sr im Bereich von 3 - 20 mol-%, der Co-Gehalt im Bereich von 2 - 10 mol-%, der Gehalt an Edelmetall-haltigem Promotor beziehungsweise zusätzlichem Promotor im Bereich von 0,25 - 3 mol-% und der Al-Gehalt im Bereich 70 - 90 mol-% liegt.

Ganz besonders bevorzugt ist ein Material mit einer Zusammensetzung, bei der der Ba-Gehalt im Bereich von 3 - 20 mol-%, der Co-Gehalt im Bereich von 2 - 10 mol-%, der Gehalt an edelmetallhaltigem Promotor beziehungsweise zusätzlichem Promotor im Bereich von 0,25 - 3 mol-% und der Al-Gehalt im Bereich 70 - 90 mol-% liegt.

Ganz besonders bevorzugt ist ein Material mit einer Zusammensetzung, bei der der Sr-Gehalt im Bereich von 3 - 20 mol-%, der Co-Gehalt im Bereich von 2 - 10 mol-%, der Gehalt an edelmetallhaltigem Promotor beziehungsweise zusätzlichem Promotor im Bereich von 0,25 - 3 mol-% und der Al-Gehalt im Bereich 70 - 90 mol-% liegt.

Es sind diejenigen kobalthexaaluminathaltigen Katalysatoren besonders bevorzugt, deren molares Verhältnis von Kobalt zu Aluminium (d.h. das n_{Co}/n_{Al}-Verhältnis) im Bereich von 0,05 bis 0,09 und besonders bevorzugt im Bereich von 0,06 bis 0,08 liegt. In einer bevorzugten Ausgestaltung des Katalysators, der Gegenstand des erfindungsgemäßen Reformierungsverfahrens ist, liegt das molare Verhältnis von M^{BaSrLa} zu Aluminium (d.h. das n_{MBaSrLa} /n_{Al}-Verhältnis) in einem Bereich von 0,09 bis 0,25, besonders bevorzugt im Bereich von 0,092 bis 0,20. Vorzugsweise liegt das molare Verhältnis von Co zu M^{BaSrLa} (d.h. das n_{Co}/n_{MBaSrLa}-Verhältnis) im Bereich von 1,0 bis 0,3 und besonders bevorzugt im Bereich von 0,85 bis 0,40. Die Abkürzung M^{BaSrLa} kennzeichnet, dass das zumindest eine Element aus der Gruppe Ba, Sr, La enthalten ist.

Für den Fall, dass die Herstellung des Katalysators durch Imprägnierung in Verbindung mit einer Metallsalzlösung erfolgt: Als Metallsalze eignen sich alle Salze, die in einem Lösemittel aufgelöst werden können, um somit eine möglichst homogene Verteilung der Metallspezies auf der Oberfläche der Aluminiumquelle, vorzugsweise des Böhmits, bewirken zu können.

Beispielsweise handelt es sich bei den zugeführten Metallsalzen um Nitrate beziehungsweise um hydrathaltige Nitrate. Als bevorzugtes Lösemittel wird Wasser verwendet.

Vorzugsweise enthält die Aluminiumquelle nur eine geringe Menge an Nitrat beziehungsweise ist nitratfrei. Bei Betrachtung des Nitratgehaltes und des Gesamtgehaltes an allen metallischen Anteilen im Synthesesystem (d.h. Al zusammen mit Co und den weiteren Metallen), so ist der Nitratgehalt vorzugsweise kleiner als 40 mol-%, weiter bevorzugt kleiner als 25 mol-% und noch weiter bevorzugt kleiner als 18 mol-%.

Es ist denkbar, dass der Imprägnierlösung edelmetallhaltige Salze als Nebenbestandteile zugesetzt werden, die als Promotoren wirken und zu einer Aktivitätssteigerung des Katalysators führen. Jedoch ist auch zu berücksichtigen, dass beispielsweise die Verwendung von edelmetallhaltigen Promotoren zu einer Kostensteigerung des Katalysators führen kann. Bevorzugte Edelmetalle für eine Promotierung sind unter anderem Platin, Rhodium, Palladium.

Im Hinblick auf die Einbringung der edelmetallhaltigen Promotoren ist zu sagen, dass diese während der Katalysatorsynthese zugeführt werden können oder dass diese auf dem fertigen Katalysator abgeschieden werden können.

Die Erfindung betrifft ein Verfahren zur Reformierung von Kohlenwasserstoffen, vorzugsweise Methan, in Gegenwart von Kohlendioxid, wobei das Verfahren die folgenden Schritte umfasst:
(a.1) Inkontaktbringen von einem Reformiergas, das mehr als 70 vol.-% Kohlenwasserstoffe, vorzugsweise Methan, und Kohlendioxid enthält, mit einem hexaaluminathaltigen Katalysator,
(a.2) Beheizung des Reaktors beziehungsweise des darin befindlichen Katalysators beim Inkontaktbringen mit dem Reformiergas bei einer Temperatur, die größer ist als 700 °C, vorzugsweise größer als 800 °C und weiter vorzugsweise größer als 900 °C,
(a.3) Betrieb des Reaktors während der Durchführung der Reaktion bei einem Prozessdruck, der größer ist als 5 bar, vorzugsweise größer als 10 bar und weiter vorzugsweise größer als 15 bar,
(a.4) Beaufschlagung des Katalysators mit einem Reformiergasstrom dessen GHSV in einem Bereich von 500 bis 20000 hr⁻¹ liegt, vorzugsweise in einem Bereich von 1500 bis 10000 hr⁻¹ und weiter vorzugsweise in einem Bereich von 2000 bis 5000 hr⁻¹, und wobei
der hexaaluminathaltige Katalysator Kobalt und zumindest ein weiteres Element aus der Gruppe Ba, Sr, La enthält, der eine BET-Oberfläche größer als 2 m²/g aufweist, einen Co-Gehalt im Bereich von 2 - 15 mol-%, einen Gehalt an weiterem Metall aus der Gruppe Ba, Sr, La in einem Bereich von 2 - 25 mol-%, und einen Gehalt an Al in einem Bereich von 70 - 90 mol-% aufweist und der Katalysator oxidische Nebenphase im Bereich von 3 - 40 Gew.-% aufweist, die ausgewählt ist aus der Gruppe theta-Aluminiumoxid, alpha-Aluminiumoxid, LaAlO₃, BaAl₂O₄, SrAl₂O₄, CoAl₂O₄, La-stabilisiertes Aluminiumoxid, La-stabilisiertes Aluminiumoxidhydroxid.

In einer bevorzugten Ausführungsform des erfindungsgemäßen Verfahrens ist dem Reformierungsverfahren ein Aktivierungsprozess vorgeschaltet. Durch den Aktivierungsprozess ist es möglich, den Katalysator unter kontrollierten Bedingungen auf die gewünschten Prozessparameter zu stellen.

Der Aktivierungsprozess umfasst die thermische Behandlung des Katalysators in einer reduzierenden Gasatmosphäre bei einer Temperatur im Bereich von 300 °C bis 900 °C. Vorzugsweise wird der Katalysator unter Verwendung eines kontrollierten Aufheizprozesses auf die Prozesstemperatur geheizt. Die Aufheizrate liegt vorzugweise in einem Bereich von 1 °C/min bis 30 °C/min, wobei ein Bereich von 5 °C/min bis 15 °C/min bevorzugt ist.

Vorzugsweise ist der Aktivierungsprozess mit einer Konditionierung des Katalysators gekoppelt beziehungsweise ist die Konditionierung der Aktivierung nachgeschaltet. Unter Konditionierung ist ein Vorgang zu verstehen, bei dem der Katalysator stufenweise an die Prozessparameter der Zielreaktion herangeführt wird. Durch die Konditionierungsschritte wird eine unkontrollierte Verkokung des Katalysators während des sogenannten Anfahrens wirksam unterbunden.

Die Konditionierung des Katalysators besteht beispielsweise darin, dass der Katalysator in Gegenwart von Methan, Wasserdampf und/oder Wasserstoff auf die Prozesstemperatur geheizt wird. Es ist auch möglich, dass der Katalysator in Gegenwart von Wasserdampf konditioniert wird.

Das Reformiergas, das den Hauptbestandteil des Eduktfluids bildet, weist eine Zusammensetzung auf, bei der der Anteil an Kohlenwasserstoff, vorzugsweise Methan, und Kohlendioxid insgesamt größer als 70 vol.-% ist.

Vorzugsweise liegen das Methan und das Kohlendioxid im Eduktfluid in äquimolaren beziehungsweise nahezu äquimolaren Mengen vor. Ein bevorzugtes Verhältnis von Methan zu Kohlendioxid liegt im Bereich von 4 zu 1 bis 1 zu 2, besonders bevorzugt im Bereich von 3 zu 1 bis 3 zu 4, ganz besonders bevorzugt im Bereich von 2 zu 1 bis 3 zu 4. Das am meisten bevorzugte Verhältnis von Methan zu Kohlendioxid liegt - wie oben erwähnt - bei 1 zu 1. Falls es sich bei dem kohlenwasserstoffhaltigen Ausgangsgas um Ethan handelt, so liegen Kohlendioxid und Ethan in einem Verhältnis von 2 zu 1 vor.

Dem Eduktfluid wird während des Verfahrens Wasserdampf zugeführt. Vorzugsweise ist der Anteil an Wasserdampf im Eduktfluid gleich oder kleiner 30 vol.-%, weiter vorzugsweise gleich oder kleiner 20 vol.-% und noch weiter bevorzugt gleich oder kleiner 15 vol.-%. Eine bevorzugte Reformiergaszusammensetzung enthält die Komponenten CH₄/CO₂/H₂O in einem prozentualen Verhältnisbereich der Gasvolumina von 35/35/30 zu 48/48/4, und weiter bevorzugt ist ein Bereich von 43/43/14 zu 45/45/10.

Aus verfahrenstechnischem Gründen können dem Reformiergas noch Standardgase oder Hilfsgase zugesetzt werden. Bei dem Standardgas handelt es sich beispielsweise um ein Edelgas, das mit einem Mengenanteil von 1 bis 5 vol.-% zugesetzt wird. Die Zugabe eines internen Standards bei Laboruntersuchungen dient der Bestimmung der Widerfindungsrate.

Bei einer bevorzugten Verfahrensführung wird mittels des erfindungsgemäßen Verfahrens ein Synthesegas hergestellt, das ein H₂/CO-Verhältnis aufweist, das im Bereich von 0,85 bis 1,4 liegt, weiter vorzugsweise liegt das H₂/CO-Verhältnis in einem Bereich von 0,9 bis 1,2 und noch weiter bevorzugt in einem Bereich von 0,95 bis 1,1.

Mittels des erfindungsgemäßen Verfahrens ist es möglich, den Reformierungsprozess bei drastischen Prozessbedingungen durchzuführen, ohne dass hierbei eine signifikante Menge an Koks auf dem hexaaluminathaltigen Katalysator abgeschieden wird. Aufgrund der sehr hohen thermischen Stabilität und der Druckbeständigkeit des Katalysators kann dieser über lange Prozesslaufzeiten hinweg eingesetzt werden.

In einer bevorzugten Ausführungsform ist das erfindungsgemäße Reformierungsverfahren mit dem hexaaluminathaltigen Katalysator dadurch gekennzeichnet, dass die Kobaltspezies in der Kobalthexaaluminatphase des Katalysators vorliegen und während der Durchführung des Verfahrens zum überwiegenden Teil in der Hexaaluminatphase erhalten bleiben. Somit weist der Katalysator, der nach der Durchführung dieses bevorzugten Verfahrens erhalten wird, nur einen sehr geringen Gehalt an metallischen Kobaltspezies auf.

Die Durchführung der Reformierung bei hohen Prozessdrücken ist vorteilhaft, da ein Synthesegas gebildet wird, das auch unter einem sehr hohen Druck steht. Das Synthesegas kann für weitere Prozesse eingesetzt werden, bei denen das Synthesegas als Ausgangsstoff unter hohem Druck vorliegen muss. Bei den Folgeprozessen kann es sich um Methanol-Synthese, Fischer-Tropsch-Synthese oder sonstige Gas-to-Liquid-Synthesen handeln. Vorzugsweise wird das mittels des Verfahrens hergestellte Synthesegas für diejenigen Folgeprozesse eingesetzt, bei denen ein H₂/CO-Verhältnis erforderlich ist, das auch im Rahmen des erfindungsgemäßen Verfahrens unter Verwendung der hexaaluminathaltigen Katalysatoren bereitgestellt werden kann.

Da mittels des erfindungsgemäßen Verfahrens ein Synthesegas bereitgestellt werden kann, das unter einem hohen Druck steht, ist das erfindungsgemäße Verfahren denjenigen Verfahren, die aus dem Stand der Technik bekannt sind, überlegen.

### I. Beispiel zur Herstellung eines Katalysators, der im Rahmen des erfindungsgemäßen Reformierungsverfahrens eingesetzt wird

Zur Herstellung des Katalysators E3 werden zunächst Kobalt- und ein Lanthannitrat, die sich in einem Becherglas befinden, mit 250 mL destilliertem Wasser versetzt und vollständig gelöst. Bei dem Kobaltnitrat handelt es sich um 83,1 g Co(NO₃)₃x6H₂O und beim Lanthannitrat handelt es sich um 284,9 g La(NO₃)₃x6H₂O. Die Metallsalzlösung wird mit 250 g Böhmit versetzt, woraufhin eine Suspension entsteht. Als Böhmit wird Disperal von SASOL verwendet.

Die Suspension wird für eine Zeitdauer von 15 Minuten mit einem mechanisch angetriebenen Rührwerk gerührt, wobei die Rührgeschwindigkeit durch 2000 U/Minute gekennzeichnet ist. Anschließend wird die Suspension mittels Pipette in ein Kältebad aus flüssigem Stickstoff eingetropft, um nahezu kugelförmige Teilchen mit einem Teilchendurchmesser von 5 mm auszufrieren. Die eingefrorenen Suspensionsteilchen werden zunächst mit einer Gefriertrocknungsanlage getrocknet und anschließend zur Zerkleinerung durch ein Sieb gepresst. Die Maschenweite des hier verwendeten Siebs beträgt 500 µm.

Im Anschluss an die Gefriertrocknung und Zerkleinerung wird das Material in einem Ofen bei 520 °C vorkalziniert. Danach wird das kalzinierte Material mit einer Stempelpresse zu Tabletten verpresst, die Tabletten anschießend zerkleinert und durch ein Sieb der Maschenweite 1 mm gedrückt. Die Tabletten haben einen Durchmesser von 13 mm und eine Dicke von 3 mm. Die Zielfraktion hat eine Teilchengröße von 500 bis 1000 µm.

Zur Hochtemperaturkalzinierung wird das nach der Siebung erhaltene Material in einem Muffelofen für 30 Stunden bei 1100 °C geheizt, wobei ein Luftstrom von 6 Liter/Minute über das Material geleitet wird. Der Ofen wird mit einer Aufheizrate von 5 °C auf die Temperatur von 1100 °C erwärmt.

Die Herstellung der Katalysatoren E1 und E2, die Beispiele für das beanspruchte Verfahren illustrieren, erfolgte nach der für E3 beschriebenen Syntheseprozedur, wobei die Mengen an Kobaltnitrat und Lanthannitrat so gewählt wurden, um die Katalysatorproben zu erhalten, welche die in Tabelle 1 angegebenen molaren Stöchiometrien aufweisen.

Zur Herstellung des Katalysators E4, der beispielhaft für einen Katalysator zur Illustration des erfindungsgemäßen Verfahrens ist, der Strontium-Kobalthexaaluminat enthält, wurden 64,7 g Kobaltacetat, 71,2 g Strontiumacetat und 250 g Böhmit (Disperal) eingesetzt. Die Herstellung erfolgte analog der für E3 beschriebenen Syntheseprozedur.

### II. Katalyseuntersuchungen

Zur Illustration des erfindungsgemäßen Verfahrens wurden sechs unterschiedliche hexaaluminathaltige Katalysatorproben (B1 bis B3 und E1 bis E3) in einer Laborkatalyseapparatur mit sechs parallel angeordneten Reaktoren unter den Prozessbedingungen zur Umsetzung von Reformierungsgas getestet. Bei den Katalysatorproben B1 bis B3 handelte es sich um hexaaluminathaltige Proben, die ausgehend von Nickel- und Lanthannitratsalzen hergestellt worden waren. Die Proben E1 bis E3 wurden ausgehend von Kobalt- und Lanthannitratsalzen hergestellt. Die Katalysatorproben B1 bis B3 wurden nach dem gleichen Herstellungsverfahren erhalten wie die für das erfindungsgemäße Verfahren eingesetzten Katalysatoren E1 bis E3, das unter Punkt I. beschrieben ist, wobei anstelle des Kobaltnitratsalzes ein Nickelnitratsalz eingesetzt wurde. Eine Übersicht über die Zusammensetzung der untersuchten Katalysatoren ist in Tabelle 1 gegeben.

Zur Durchführung der Untersuchungen wurden die einzelnen Reaktoren Probe befüllt, wobei hierbei eine Mindestmenge von jeweils 20 mL Probe pro Untersuchung verwendet wurde. Die Reformierungsuntersuchungen wurden bei einer Temperatur von 850 °C und bei einer Temperatur von 950 °C durchgeführt. Als Prozessparameter wurde ein Druck von 20 bar gewählt und eine GHSV von 3800 hr⁻¹ gewählt. Die Zusammensetzung der bei den Reaktionen erhaltenen Produktfluide wurden mittels GC-Analysen bestimmt, wobei ein Agilent-GC eingesetzt wurde, der mit zwei WLD's und einem FID ausgerüstet war.

### Testserie 1

Eine zusammenfassende Darstellung zu den Prozessbedingungen und den dabei erzielten Katalysedaten der Reformierungsuntersuchungen ist in Tabelle 2 wiedergegeben.

In Bezug auf die katalytischen Untersuchungen ist zu sagen, dass die Testbedingungen während der Untersuchung stufenweise geändert wurden, um die Severity (den Schärfegrad der Prozessbedingungen) zu erhöhen und somit drastischere Prozessbedingungen herbeizuführen. Die Änderung betraf die Zusammensetzung des Eduktfluids und die Temperatur der Untersuchungen. Zur Kennzeichnung der unterschiedlichen Teststufen wurden den Probennummern in der Tabelle 2 jeweils eine Endung aus der Reihe S1, S2, S3, ... S9 hinzugefügt, die sich auf die Bedingungen der jeweiligen Teststufe bezieht. Die Untersuchungen der Katalysatorproben wurden dann abgebrochen, wenn die Koksbildung eintrat, was anhand eines Aktivitätseinbruchs bei der Methankonvertierung nachgewiesen wurde.

Die Untersuchungen wurden in Gegenwart von 5 vol.-% Argon als Standardgas durchgeführt, das dem Eduktfluid aus analysentechnischen Gründen zugefügt wurde, um die Stoffwiederfindungsrate zu kontrollieren.

Der Startpunkt für jede Untersuchungen waren die Bedingungen der Dampfreformierung von Stufe 1 (d.h. die Kennzeichnung S1 in Tabelle 2), bei der die Proben einer Reaktionstemperatur von 850 °C und einem Methan-zu-H₂O-Verhältnis von 1 : 1 ausgesetzt wurden.

In der zweiten Stufe (d.h. der Stufe S2) wurden die Katalysatoren Tri-Reformierungsbedingungen ausgesetzt, bei der das Eduktfluid Methan, Kohlendioxid und Wasserdampf enthielt.

Bei der Stufe 3 bis 7 wurde vollständig auf die Zugabe von Wasserdampf verzichtet, wobei jedoch dem Eduktfluid Wasserstoff zugesetzt wurde. Der Wasserstoffanteil wurde von den Stufen 3 an bis zur Stufe 7 schrittweise von 40 vol.-% auf 10 vol.-% herabgesetzt, wohingegen der Anteil an Methan und Kohlendioxid von je 27,5 vol.-% auf 42,5 vol.-% erhöht wurde. Eine Ausnahme bildet der Übergang von der Stufe 4 auf die Stufe 5, bei der eine Erhöhung der Katalysatortemperatur von 850 °C auf 950 °C vorgenommen wurde, die Zusammensetzung des Eduktfluids jedoch konstant gehalten wurde.

Ab der Stufe 8 wurde dem Eduktfluid wieder Wasserdampf zugesetzt, wobei jedoch gegenüber der Stufe 7 die Hälfte des Wasserstoffs (d.h. 5 vol.-% H₂) durch Wasserdampf ersetzt wurde. Ab der Stufe 9 wurde vollständig auf die Zugabe von Wasserstoff zum Eduktfluid verzichtet, wobei der Wasserdampfanteil von 5 vol.-% auf 10 vol.-% erhöht wurde.

Die kobalthaltigen Hexaaluminate zeigten bei höherer Prozessschärfe (d.h. bei gesteigerter severity) eine größere Aktivität als die nickelhaltigen Hexaaluminate. So setzte bei den Proben B1, B2 und B3 bereits ab den Teststufen S5, S7 und S6 die Koksbildung ein, so dass die Untersuchungen bei diesen Teststufen abgebrochen werden mussten. Die Zeitdauer bis zum Einsatz der Koksbildung lag hierbei im Bereich von 260 bis 360 Stunden. Der Beginn der Koksbildung auf den Katalysatorproben wurde in der Tabelle 2 durch die Buchstaben KA gekennzeichnet.

Bei der Durchführung des erfindungsgemäßen Verfahrens mit kobalthaltigen Hexaaluminatproben E1, E2 und E3 konnte das Verfahren bei den Reaktionsbedingungen der Prozessstufen S8 und S9 durchgeführt werden. Während der Teststufe S9 wurden die Katalysatorproben bei einer Temperatur von 950 °C untersucht, wobei das Eduktgas eine Zusammensetzung von 42,5 vol.-% Methan, 42,5 vol.-% Kohlendioxid und 10 vol.-% H₂O aufwies.

**Tabelle 1 zeigt die Zusammensetzung der Katalysatorproben B1 bis B3 und E1 bis E3 (die Angabe der Werte bezieht sich auf mol-%), die dazugehörige BET-Oberfläche ("Surface Area") sowie die Schüttdichte ("Loose bulk density ").**

| Probe | Ni | Co | La | Al | SA [m²/g] | LBD [g/mL] |
|---|---|---|---|---|---|---|
| B1 | 6 | | 8 | 86 | 6,1 | 0,953 |
| B2 | 6 | | 10 | 84 | 4,0 | 1,042 |
| B3 | 6 | | 14 | 80 | 3,1 | 1,196 |
| **E1** | | **6** | **8** | **86** | **13,8** | **0,953** |
| **E2** | | **6** | **10** | **84** | **7,1** | **1,036** |
| **E3** | | **6** | **14** | **80** | **8,3** | **1,008** |

**Tabelle 2 zeigt eine zusammenfassende Darstellung der Zusammensetzung der untersuchten Katalysatoren, der Reaktionsbedingungen und der Umsätze. (Beispiele, die das erfindungsgemäße Verfahren zeigen, sind durch folgende Beispiele gegeben: E1_S6, E1_S7, E1_S8, E1_S9, E2_S6, E2_S7, E2_S8, E2_S9 E3_S6, E3_S7, E3_S8, E3_S9).**

| Diejenigen Beispiele (d.h. Vergleichsbeispiele), die unter den Beispielen E1_S1 - E1_S5, E2_S1 - E2_S5, E3_S1 - E3_S5 gegeben sind, sind nicht von den Ansprüchen umfasst. Weiterhin nicht von den Ansprüchen umfasst sind diejenigen Beispiele (d.h. Vergleichsbeispiele), die unter B1 bis B3 gegeben sind. | | | | | | | | |
|---|---|---|---|---|---|---|---|---|
| Beispiel | Temp. [°C] | CH₄ [vol.%] | CO₂ [vol.%] | H₂O [vol.%] | H₂ [vol.%] | CH₄-Conv. [%] | CO₂-Conv. [%] | H₂/CO -ratio |
| B1_S1 | 850 | 47,5 | - | 47.5 | 0 | 32 | | 4,4 |
| B1_S2 | 850 | 27.5 | 27.5 | 40 | | 50 | 24 | 1,7 |
| B1_S3 | 850 | 27.5 | 27.5 | - | 40 | 4 | 56 | 1,35 |
| B1_S4 | 850 | 32.5 | 32.5 | - | 30 | 36 | 73 | 1,2 |
| B1_S5 | 950 | 32.5 | 32.5 | - | 30 | | | KA |
| | | | | | | | | |
| B2_S1 | 850 | 47,5 | - | 47.5 | - | 40 | | 4,5 |
| B2_S2 | 850 | 27.5 | 27.5 | 40 | - | 65 | 30 | 1,6 |
| B2_S3 | 850 | 27.5 | 27.5 | - | 40 | 6 | 58 | 1,6 |
| B2_S4 | 850 | 32.5 | 32.5 | - | 30 | 4 | 40 | 1,45 |
| B2_S5 | 950 | 32.5 | 32.5 | - | 30 | 40 | 75 | 1,2 |
| B2_S6 | 950 | 37.5 | 37.5 | - | 20 | 55 | 85 | 1,05 |
| B2_S7 | 950 | 42.5 | 42.5 | - | 10 | | | KA |
| | | | | | 5 | | | |
| B3_S1 | 850 | 47,5 | - | 47.5 | - | 34 | | 4,8 |
| B3_S2 | 850 | 27.5 | 27.5 | 40 | | 52 | 23 | 1,7 |
| B3_S3 | 850 | 27.5 | 27.5 | - | 40 | 4 | 56 | 1,71 |
| B3_S4 | 850 | 32.5 | 32.5 | - | 30 | 36 | 75 | 1,25 |
| B3_S5 | 950 | 32.5 | 32.5 | - | 30 | 58 | 80 | 1,4 |
| B3_S6 | 950 | 37.5 | 37.5 | - | 20 | | | KA |
| | | | | | | | | |
| E1_S1 | 850 | 47,5 | - | 47.5 | - | 25 | | 6 |
| E1_S2 | 850 | 27.5 | 27.5 | 40 | - | 35 | 16 | 1,7 |
| E1_S3 | 850 | 27.5 | 27.5 | - | 40 | 17 | 66 | 1,6 |
| E1_S4 | 850 | 32.5 | 32.5 | - | 30 | 18 | 63 | 1,08 |
| E1_S5 | 950 | 32.5 | 32.5 | - | 30 | 60 | 86 | 1,28 |
| | | | | | | | | |
| E1_S6 | 950 | 37.5 | 37.5 | - | 20 | 62 | 85 | 1,05 |
| E1_S7 | 950 | 42.5 | 42.5 | - | 10 | 57 | 79 | 0,86 |
| E1_S8 | 950 | 42.5 | 42.5 | 5 | 5 | 60 | 74 | 0,86 |
| E1_S9 | 950 | 42.5 | 42.5 | 10 | - | 82 | 78 | 1,1 |
| | | | | | | | | |
| E2_S1 | 850 | 47,5 | - | 47.5 | - | 5 | | 12 |
| E2_S2 | 850 | 27.5 | 27.5 | 40 | - | 8 | 2 | 2,25 |
| E2_S3 | 850 | 27.5 | 27.5 | - | 40 | 25 | 70 | 1,6 |
| E2_S4 | 850 | 32.5 | 32.5 | - | 30 | 41 | 75 | 1,2 |
| E2_S5 | 950 | 32.5 | 32.5 | - | 30 | 65 | 90 | 1,3 |
| | | | | | | | | |
| E2_S6 | 950 | 37.5 | 37.5 | - | 20 | 68 | 90 | 1,09 |
| E2_S7 | 950 | 42.5 | 42.5 | - | 10 | 71 | 89 | 0,93 |
| E2_S8 | 950 | 42.5 | 42.5 | 5 | 5 | 75 | 85 | 0,93 |
| E2_S9 | 950 | 42.5 | 42.5 | 10 | - | 82 | 79 | 1,0 |
| | | | | | | | | |
| E3_S1 | 850 | 47,5 | - | 47.5 | - | 6 | | 7,2 |
| E3_S2 | 850 | 27.5 | 27.5 | 40 | - | 10 | 5 | 1,82 |
| E3_S3 | 850 | 27.5 | 27.5 | - | 40 | 30 | 74 | 1,55 |
| E3_S4 | 850 | 32.5 | 32.5 | - | 30 | 38 | 74 | 1,2 |
| E3_S5 | 950 | 32.5 | 32.5 | - | 30 | 65 | 90 | 1,3 |
| | | | | | | | | |
| **E3_S6** | **950** | **37.5** | **37.5** | **-** | **20** | **68** | **90** | **1,08** |
| **E3_S7** | **950** | **42.5** | **42.5** | **-** | **10** | **70** | **88** | **0,92** |
| **E3_S8** | **950** | **42.5** | **42.5** | **5** | **5** | **74** | **85** | **0,92** |
| **E3_S9** | **950** | **42.5** | **42.5** | **10** | **-** | **85** | **75** | **1,15** |

### Testserie 2

Ein Teil der Katalysatorprobe aus dem experimentellen Beispiel E2 wurde einem weiteren katalytischen Test unter veränderten Testbedingungen unterzogen. Die Zusammensetzung des Feeds und das Testprotokoll 2 sind in der Tabelle 3 dargestellt. Bei dem Test wurde die Probe E2 einem Feed ausgesetzt, der sehr geringe Wasserdampfpartialdrücke aufwies gegenüber den Untersuchungen, die in Tabelle 2 gezeigt sind. Das Testprotokoll 2 ist gegenüber dem ersten Testprotokoll dahingehend abgeändert, dass dem Feedgas nur in wenigen Prozessstufen Wasserstoff hinzugefügt wurde. Bei denjenigen Prozessstufen, bei denen dem Feedgas Wasserstoff zugeführt wurde, war der Gehalt an Wasserstoff gering und lag bei 5 vol.-% beziehungsweise bei 10 vol.-%. In den ersten Prozessstufen (S01 bis S04) wurde das thermodynamische Gleichgewicht auch nicht annäherungsweise erreicht. Eine denkbare Erklärung für das Nichterreichen eines Zustands in der Nähe des thermodynamischen Gleichgewichts wäre, dass der Katalysator bei den hohen Wasserdampfpartialdrücken zunächst nur unvollständig reduziert worden war.

Ein unerwarteter Befund war, dass der Katalysator E2 über einen extrem langen Zeitraum unter den high-severity-Bedingungen (d.h. äußerst harschen und anspruchsvollen Prozessbedingungen) eine sehr hohe katalytische Aktivität zeigte und diese auch über einen sehr langen Zeitraum von mehr als 250 Stunden aufrechterhalten wurde. Nach dem Ende der Untersuchung wurde der Katalysator aus dem Reaktor ausgebaut, wobei dieser keinerlei Koksablagerungen aufwies. Die Ergebnisse belegen somit die hohe Koksresistenz des Katalysators bei dem Betrieb des Katalysators unter den Prozessbedingungen, die in der Tabelle 3 geben sind. Gleichzeitig wurde auch ein Produktstrom erhalten, der ein vorteilhaftes Verhältnis von H₂ zu CO aufwies.

**Tabelle 3 zeigt die Testbedingungen und Ergebnisse, die bei der Untersuchung von Katalysatorprobe E2 unter Verwendung von Testprotokoll 2 bei geänderten Prozessstufen (S01 bis S05) erzielt wurden. Die katalytischen Messungen wurden bei 850 °C durchgeführt. Diejenigen Beispiele, die das erfindungsgemäße Verfahren zeigen, sind durch folgende Beispiele gegeben: E2_S03, E2_S04, E2_S05.**

| Beispiele, die nicht dem erfindungsgemäßen Verfahren entsprechen, sind gegeben durch die folgenden Beispiele (d.h. Vergleichsbeispiele) gegeben: E2_S01 und E2_S02. | | | | | | | | |
|---|---|---|---|---|---|---|---|---|
| **Beispiel** | TOS [h] | CH₄ [vol.%] | CO₂ [vol.%] | H₂O [vol.%] | H₂ [vol.%] | CH₄-Conv. [%] | CO₂-Conv. [%] | H₂/CO -ratio |
| E2_S01 | 0-94 | 27,5 | 27,5 | 40,0 | 0 | 10-33 | 3-9 | 1,7-1,9 |
| E2_S02 | 94 - 141 | 32,5 | 32,5 | 30,0 | 0 | 37-31 | 21-19 | 1,4 |
| | | | | | | | | |
| **E2_S03** | **141-167** | **37,5** | **37,5** | **20,0** | **10,0** | **30** | **33-31** | **1,3-1,4** |
| **E2_S04** | **167-191** | **37,5** | **37,5** | **25,0** | **5,0** | **29-26** | **28-27** | **1,2** |
| **E2_S05** | **191-453** | **37,5** | **37,5** | **20,0** | **0** | **26-65** | **23-57** | **1,1-1,0** |

### Testserie 3

In einer weiteren Untersuchungsreihe wurden Ausführungsbeispiele für erfindungsgemäße Katalysatoren, die gemäß der Beispiele E1, E2 und E4 hergestellt worden waren, und eine Vergleichsprobe, die gemäß dem Beispiel B2 hergestellt worden war, einer katalytischen Reformierung unterzogen, bei denen ein wasserstofffreies Eduktgas eingesetzt wurde. Die Ergebnisse dieser Untersuchungen sowie die experimentellen Bedingungen in Bezug auf die Temperatur und die Eduktgaszusammensetzung sind in der Tabelle 5 wiedergegeben. Proben E1 und E2 waren hexaaluminathaltige Katalysatoren, bei denen die Hexaaluminatphase Kobalt und Lanthan enthielt, die Probe E4 war ein hexaaluminathaltiger Katalysator, bei der die Hexaaluminatphase Kobalt und Strontium enthielt und die Probe B2 war ein hexaaluminathaltiger Katalysator, bei der die Hexaaluminatphase Nickel und Lanthan enthielt.

Gegenüber den Katalyseexperimenten, die in den Testserien 1 und 2 durchgeführt wurden und deren Ergebnisse in den Tabellen 2 und 3 dargestellt sind, wurden in der Testserie 3 dem Eduktgas eine geringere Menge Wasserdampf zugefügt. Insgesamt ist das Eduktgas in Testserie 3 durch einen niedrigen Wasserdampfpartialdruck und die Abwesenheit von Wasserstoff gekennzeichnet (siehe Tabelle 5). Das in der Testserie 3 verwendete Testprotokoll (d.h. das Testprotokoll 3) ist in unterschiedliche Prozessstufen unterteilt. In der ersten Prozessstufe (S001) wurde der Katalysator mit einem Eduktgas in Kontakt gebracht, das ein äquimolares Verhältnis von Methan zu Wasser (H₂O zu CH₄ = 1,0) enthielt. In der zweiten Prozessstufe wurde ein Eduktgas verwendet, das ein äquimolares Verhältnis von 27,5 vol.-% Methan und 27,5 vol.-% Kohlendioxid sowie zusätzlich 40 vol.-% H₂O enthielt. Anschließend wurde in den nächsten drei Prozessstufen (S003 - S005) das äquimolare Verhältnis von Methan zu Kohlendioxid beibehalten, während der Wassergehalt schrittweise von 30 vol.-% (bei Prozessstufe S003) auf 15 vol.-% (bei Prozessstufe S005) abgesenkt wurde. (In der Prozessstufe S005 ist das H₂O-zu-CH₄-Verhältnis 0,38.)

Die innerhalb der Testserie 3 erzielten Ergebnisse zeigen, dass mit Hilfe der kobalthexaaluminathaltigen Katalysatorproben E1, E2, E4 über lange Zeiträume und unter sehr drastischen Prozessbedingungen (high-severity-Bedingungen) - insbesondere auch hohen Temperaturen und sehr geringen H₂O Partialdrücken von nur 15 vol.-% - eine hohe katalytische Aktivität und einen stabilen Betrieb ermöglichen. Demgegenüber konnte die nickelhexaaluminathaltige Probe B2 nur bis zur Prozessstufe S003 (30 vol.-% H₂O) betrieben werden. Die weitere Verschärfung der Prozessbedingungen führte zu einer raschen Verkokung der Probe B2, so dass das Experiment abgebrochen werden musste.

Die an den Proben E1, E2 und E4 vorgenommen Untersuchungen wurden jeweils nach einer kumulativen Laufzeit von mehr als tausend Stunden beendet und die Proben aus dem Reaktorrohr ausgebaut. Keine der nach der Untersuchung zurückgewonnenen Proben wies Koksablagerung auf. Die Ergebnisse sind somit ein weiterer Befund, die die äußerst hohe Koksresistenz der erfindungsgemäßen kobalthexaaluminathaltigen Katalysatoren bei den drastischen Prozessbedingungen belegen, die in der Tabelle 5 geben sind. Gleichzeitig konnte - wie der Tabelle 5 zu entnehmen ist - bei den Katalyseexperimenten ein Produktstrom erhalten werden, der ein vorteilhaftes Verhältnis von H₂ zu CO aufwies.

**Tabelle 4 zeigt die Zusammensetzung der Katalysatorprobe E4 (die Angabe der Werte bezieht sich auf mol-%), die dazugehörige BET-Oberfläche ("Surface Area") sowie die Schüttdichte ("Loose bulk density ").**

| Probe | Co | Sr | Al | SA [m²/g] | LBD [g/mL] |
|---|---|---|---|---|---|
| E4 | 6 | 8 | 86 | 25,0 | 1,035 |

**Tabelle 5 zeigt die Testbedingungen und Ergebnisse, die bei der Untersuchung von Katalysatorproben E1, E2, E4 sowie B2 im Rahmen von der Testserie 3 erhalten wurde. In der Testserie 3 wurde ein Testprotokoll verwendet (Testprotokoll 3) bei dem die Proben jeweils fünf Prozessstufen (S001 bis S005) ausgesetzt wurden. Die katalytischen Tests wurden bei einer Temperatur von 850 °C und einem Druck von 20 bar durchgeführt. Beispiele, die das erfindungsgemäßen Verfahren illustrieren, sind durch folgende Beispiele gegeben: E1_S004, E1_S005, E2_S004, E2_S005, E3_S004, E2_S005.**

| Beispiele, die nicht das erfindungsgemäße Verfahren illustrieren, sind durch folgende Beispiele (d.h. Vergleichsbeispiele) gegeben: B2_S001 bis B2_S005, E1_S001, E1_S002, E1_S003, E2_S001, E2_S002, E2_S003, E4_S001, E4_S002, E4_S003. | | | | | | | |
|---|---|---|---|---|---|---|---|
| Beispiel | Temp. [°C] | CH₄ [vol.%] | CO₂ [vol.%] | H₂O [vol.%] | CH₄-Conv. [%] | CO₂-Conv. [%] | H₂/CO-ratio |
| B2_S001 | 850 | 47,5 | - | 47,5 | 32 | - | 4,9 |
| B2_S002 | 850 | 27,5 | 27,5 | 40 | 43 | 16 | 1,7 |
| B2_S003 | 850 | 32,5 | 32,5 | 30 | 40 | 21 | 1,4 |
| B2_S004 | 850 | 37,5 | 37,5 | 20 | - | - | KA |
| B2_S005 | 850 | 40,0 | 40,0 | 15 | - | - | KA |
| | | | | | | | |
| E1_S001 | 850 | 47,5 | - | 47,5 | 58 | - | 3,8 |
| E1_S002 | 850 | 27,5 | 27,5 | 40 | 75 | 24 | 1,9 |
| E1_S003 | 850 | 32,5 | 32,5 | 30 | 62 | 33 | 1,6 |
| | | | | | | | |
| **E1_S004** | **850** | **37,5** | **37,5** | **20** | **71** | **59** | **1,1** |
| **E1_S005** | **850** | **40,0** | **40,0** | **15** | **65** | **65** | **1,0** |
| | | | | | | | |
| E2_S001 | 850 | 47,5 | - | 47,5 | 52 | - | 4,0 |
| E2_S002 | 850 | 27,5 | 27,5 | 40 | 77 | 31 | 1,8 |
| E2_S003 | 850 | 32,5 | 32,5 | 30 | 57 | 31 | 1,6 |
| | | | | | | | |
| **E2_S004** | **850** | **37,5** | **37,5** | **20** | **70** | **58** | **1,1** |
| **E2_S005** | **850** | **40,0** | **40,0** | **15** | **65** | **65** | **1,0** |
| | | | | | | | |
| E4_S001 | 850 | 47,5 | - | 47,5 | 41 | - | 4,4 |
| E4_S002 | 850 | 27,5 | 27,5 | 40 | 60 | 21 | 1,8 |
| E4_S003 | 850 | 32,5 | 32,5 | 30 | 72 | 49 | 1,3 |
| | | | | | | | |
| **E4_S004** | **850** | **37,5** | **37,5** | **20** | **67** | **60** | **1,1** |
| **E4_S005** | **850** | **40,0** | **40,0** | **15** | **64** | **64** | **1,0** |

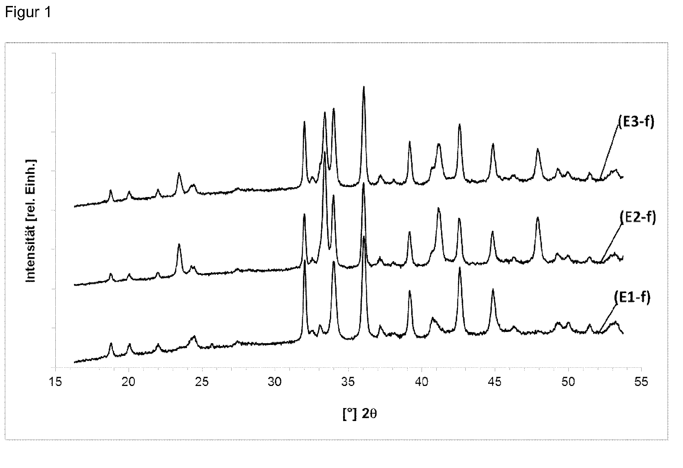

Fig. 1 zeigt drei Diffraktogramme, die an den für das erfindungsgemäße Verfahren eingesetzten Katalysatorproben E1, E2 und E3 vor dem Katalysetest (d.h. an den frischen Katalysatorproben E1-f bis E3-f) aufgenommen wurden. Die Diffraktorgramme aller drei Proben weisen jeweils Reflexe bei 32,08, 34,01 und 36,10 °2θ auf, die dem Kobalthexaaluminat und zugeordnet werden kann, und einen Reflex bei 33,42 °2θ, der der Perowskit-Phase zugeordnet werden kann. Weitere kristalline Phasen sind anhand der vorliegenden XRD-Analyse nicht zu erkennen.

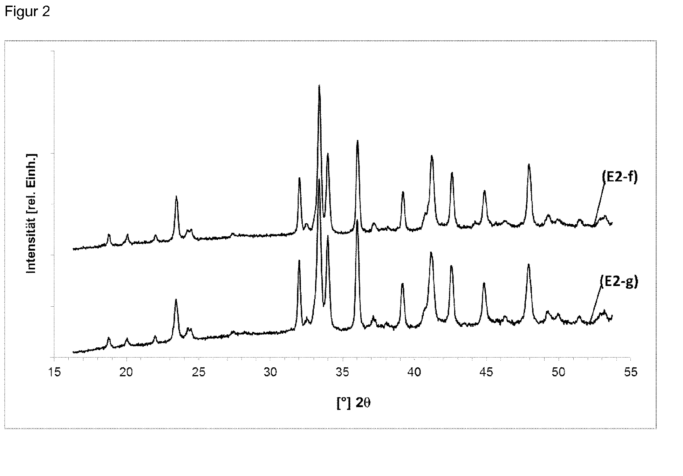

Fig. 2 zeigt zwei Diffraktorgramme, die an Katalysatorproben E2 vor und nach dem Katalysetest aufgenommen wurden und die mit E2-f (frische Katalysatorprobe) und E2-g (gealterte Katalysatorprobe) gekennzeichnet wurden. Das Diffraktorgramm, das an der Probe vor der Durchführung der Katalysetests aufgenommen worden war, zeigt keinen Unterschied gegenüber dem Diffraktorgramm, das an der gealterten Probe aufgenommen wurde. Anhand der Untersuchungen ist zu erkennen, dass das Kobalt in der Hexaaluminat-Phase verbleibt und nicht aus dieser herausgelöst wird. Kobalt in Form des freien Metalls konnte auch an der gealterten Probe nicht nachgewiesen werden.

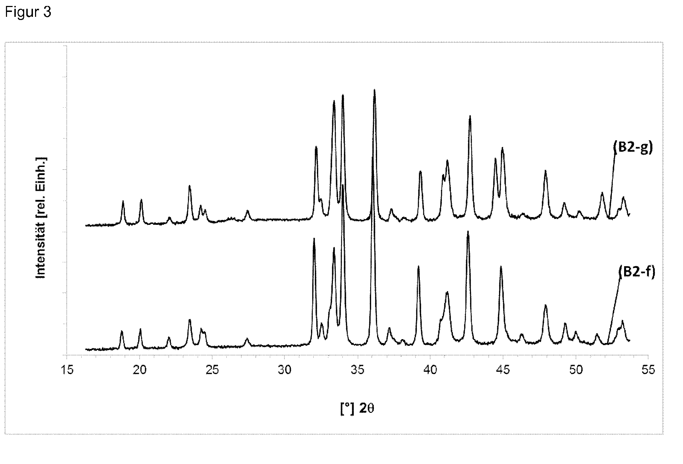

Fig.3 zeigt zwei Diffraktogramme, die an den Katalysatorproben B2 vor (d.h. Probe B2-f) und nach (d.h. Probe B2-g) dem Katalysetest aufgenommen wurden. Das Diffraktogramm, das von der gealterten Probe (B2-g) aufgenommen wurde, zeigt einen Reflex bei 44,40 °2θ, der einer Phase aus metallischem Nickel zuzuordnen ist. Die metallische Nickelphase ist in dem Diffraktogramm der frischen Katalysatorprobe nicht zu erkennen, da ein entsprechender Reflex nicht vorhanden ist.

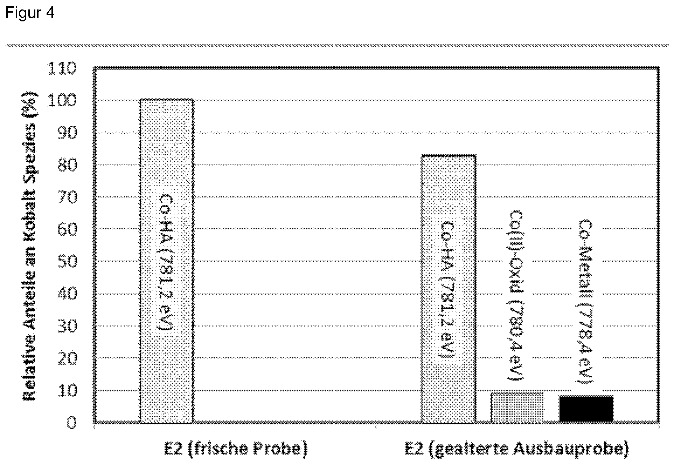

Fig. 4 zeigt die Ergebnisse der XPS-Analysen, die jeweils an einer frischen Katalysatorprobe E2-f und einer gealterten Katalysatorprobe E2-g gemessen wurde. Die in der frischen Probe E2 nachgewiesenen Kobaltspezies sind vollständig der Kobalthexaaluminatphase zuzuordnen. Die gealterte Katalysatorprobe E2-g zeigt unterschiedliche Kobaltspezies. Bemerkenswert ist, dass der Hauptteil der Kobaltspezies der Hexaaluminatphase zugeordnet werden kann und der Gehalt an metallischem Kobalt nur gering ist.

Die Proben E2-f (frische Katalysatorprobe vor Katalysetestung) und E2-g (gealterte Katalysatorprobe nach Katalysetestung) wurden jeweils einer XPS-Analyse (XPS: X-ray Photoelectron Spectroscopy) unterzogen. Die Ergebnisse dieser XPS-Analysen sind in Tabelle 6 dargestellt. In der Katalysatorprobe E2-f (d.h. dem frischen Katalysator) liegt das Kobalt ausschließlich als Kobalt-Lanthan-Hexaaluminat vor (Co-HA, 781,2 eV).

In der Tabelle 6 sind die relativen Anteile an Kobalt in der Kobalt-Lanthan-Hexaaluminatphase (Co-HA), der Kobalt-(II)-Oxidphase (Co(II)-Oxid) sowie der metallischen Kobaltphase (Co-Metall) wiedergegeben. In der Probe E2-g (d.h. der gealterten Ausbauprobe des Katalysators), wurden zusätzlich zu den Kobaltspezies, die im Kobalt-Lanthan-Hexaaluminat (Co-HA, 781,2 eV) vorliegen, noch zwei weitere Kobalt-Spezies detektiert, nämlich ein Kobalt-II-Oxid (CoO, 780,4 eV) sowie ein Kobalt-Metall (Co-Metall, 778,4 eV). Die Quantifizierung der XPS Daten (Tabelle 6) bestätige den unerwarteten Befund, dass in der gealterten Probe ein wesentlicher Anteil an nichtmetallischem Kobalt vorhanden ist und dass das Kobalt im Wesentlichen in der Kobalt-Lanthan Hexaaluminat Phase verbleibt. Es kann davon ausgegangen werden, dass dieser unerwartete Befund eine entscheidende Charakteristik des Katalysators darstellt, der für das erfindungsgemäßen Verfahrens eingesetzt werden kann, und für die außergewöhnliche Verkokungsresistenz und Aktivität des Katalysators eine wesentliche Rolle spielt.

**Tabelle 6 zeigt eine Zusammenfassung der XPS Daten einer frischen Probe von Katalysator E2-f und einer gealterten Probe von Katalysator E2-g nach Ausbau aus dem Testreaktor (n.d. = nicht detektiert).**

| | Relative Anteile an Kobalt Spezies (%) | | |
|---|---|---|---|
| | Co-HA (781,2 eV) | Co(II)-Oxid (780,4 eV) | Co-Metall (778,4 eV) |
| E2-f (frische Probe) | 100 | n.d. | n.d. |
| E2-g (gealterte Probe) | 82,6 | 9,2 | 8,3 |

Eine physikalische Charakterisierung aller in den Beispielen dargestellten Katalysatorproben wurde mittels XRD-Analysen, Stickstoffsorptions- und Schüttdichtemessungen durchgeführt. Die XRD-Analysen wurden mit einem D8 Advance Serie 2 von der Firma Bruker/AXS unter Verwendung von CuK-alpha-Quelle (mit einer Wellenlänge von 0,154 nm bei 40 kV und 40 mA) durchgeführt. Die Messungen erfolgten über den Messbereich: 5-80° (2Theta), 0.02° Schritten mit 4.8 Sekunden/Schritt.

Die XPS Analysen wurden mit einem PHI 5000 VersaProbe Spektrometer unter Verwendung von Al K-α Röntgenstrahlung (1486,6 eV, Monochromator) und einem 180° Halbkugelanalysator mit einem 16-Kanal Detektor durchgeführt. Bei den Messungen wurde eine Spotgröße von 200µm (50 Watt) verwendet. Für die Kalibrierung der Energieachse des XPS-Spektrums wurde der C1s Peak (284,8 eV) eingesetzt.

## Patentansprüche

1. Verfahren zur Reformierung von Kohlenwasserstoffen, vorzugsweise Methan, in Gegenwart von CO₂, das folgende Schritte umfasst:
(a.1) Inkontaktbringen von Reformiergas, bei dem der Anteil an Kohlenwasserstoff, vorzugsweise Methan, und CO₂ insgesamt größer 70 vol.-% ist, mit einem hexaaluminathaltigen Katalysator,
(a.2) Beheizung des Katalysators beim Inkontaktbringen mit dem Reformiergas bei einer Temperatur > 973,15 K,
(a.3) Betrieb des Reaktors während der Durchführung der Reaktion bei einem Prozessdruck > 5 bar,
(a.4) das mit dem Katalysator in Kontakt gebrachte Reformiergas weist eine GHSV auf, die in einem Bereich von 500 bis 20000 hr⁻¹ liegt und wobei
der hexaaluminathaltige Katalysator Kobalt und zumindest ein weiteres Metall aus der Gruppe Ba, Sr, La enthält und wobei der hexaaluminathaltige Katalysator, der eine BET-Oberfläche größer als 2 m2/g aufweist, einen Co-Gehalt im Bereich von 2 - 15 mol-%, einen Gehalt an weiterem Metall aus der Gruppe Ba, Sr, La in einem Bereich von 2 - 25 mol-%, und einen Gehalt an Al im Bereich von 70 - 90 mol-% aufweist und der Katalysator oxidische Nebenphase im Bereich von 3 - 40 Gew.-% aufweist, die ausgewählt ist aus der Gruppe theta-Aluminiumoxid, alpha-Aluminiumoxid, LaAlO₃, BaAl₂O₄, SrAl₂O₄, CoAl₂O₄, La-stabilisiertes Aluminiumoxide, La-stabilisiertes Aluminiumoxidhydroxid.

2. Verfahren zur Reformierung von Kohlenwasserstoffen, vorzugsweise Methan, in Gegenwart von CO₂ gemäß Anspruch 1, wobei der hexaaluminathaltige Katalysator ein molares Verhältnis von Kobalt zu Aluminium im Bereich von 0,05 bis 0,09 sowie ein molares Verhältnis von zumindest einem Element aus der Gruppe Ba, Sr, La (M_{BaSrLa}) zu Aluminium in einem Bereich von 0,09 bis 0,25 und ein molares Verhältnis von Co zu dem zumindest einen Element aus der Gruppe Ba, Sr, La (M_{BaSrLa}) im Bereich von 1,0 bis 0,3 aufweist.

3. Verfahren zur Reformierung von Kohlenwasserstoffen, vorzugsweise Methan, in Gegenwart von CO₂ gemäß einem der Ansprüche 1 bis 2, wobei der hexaaluminathaltige Katalysator eine BET-Oberfläche größer als 4 m²/g aufweist.

4. Verfahren zur Reformierung von Kohlenwasserstoffen, vorzugsweise Methan, in Gegenwart von Kohlendioxid gemäß einem der Ansprüche 1 bis 3, wobei das in Schritt (a.1) genannte Reformiergas einen H₂O-Gehalt von bis zu 30 vol-% aufweist.

5. Verfahren zur Reformierung von Kohlenwasserstoffen, vorzugsweise Methan, in Gegenwart von Kohlendioxid gemäß einem der Ansprüche 1 bis 4, das **dadurch gekennzeichnet ist, dass** dem Reformierungsverfahren ein Aktivierungsprozess und/oder ein Konditionierungsprozess vorgeschaltet ist.

6. Verfahren zur Reformierung von Kohlenwasserstoffen, vorzugsweise Methan, in Gegenwart von Kohlendioxid gemäß einem der Ansprüche 1 bis 5, wobei das Eduktfluid Wasserdampf enthält und eine Zusammensetzung aufweist, bei der die Komponenten CH₄/CO₂/H₂O in einem Verhältnisbereich der Gasvolumina von 35/35/30 zu 48/48/4 liegen.

7. Verfahren zur Reformierung von Kohlenwasserstoffen, vorzugsweise Methan, in Gegenwart von Kohlendioxid gemäß einem der Ansprüche 1 bis 6, wobei der Katalysator zumindest einen edelmetallhaltigen Promotor aus der Gruppe Pt, Rh, Pd, Ir enthält und der Gehalt an edelmetallhaltigem Promotor im Bereich von 0,1 - 3 mol-% liegt oder der Katalysator weitere Kationen umfasst, vorzugsweise aus der Gruppe Mg, Ca, Ga, Be, Ni, Fe, Cr, Mn.

## Claims

1. A process for the reforming of hydrocarbons, preferably methane, in the presence of CO₂, which comprises the following steps:
(a.1) contacting of reforming gas in which the total proportion of hydrocarbons, preferably methane, and CO₂ is more than 70% by volume with a hexaaluminate-comprising catalyst,
(a.2) heating of the catalyst when coming into contact with the reforming gas at a temperature > 973.15 K,
(a.3) operation of the reactor while the reaction is being carried out at a process pressure of > 5 bar,
(a.4) the reforming gas brought into contact with the catalyst has a GHSV in a range from 500 to 20 000 hr⁻¹, and wherein
the hexaaluminate-comprising catalyst comprises cobalt and at least one further metal from the group consisting of Ba, Sr, La, and wherein the hexaaluminate-comprising catalyst having a BET surface area of greater than 2 m²/g has a Co content in the range of 2 - 15 mol%, a content of further metal from the group consisting of Ba, Sr, La in a range of 2 - 25 mol%, and a content of Al in the range of 70 - 90 mol%, and the catalyst has an oxidic secondary phase in the range of 3 - 40% by weight, selected from the group consisting of theta-aluminum oxide, alpha-aluminum oxide, LaAlO₃, BaAl₂O₄, SrAl₂O₄, CoAl₂O₄, La-stabilized aluminum oxides, La-stabilized aluminum oxide hydroxide.

2. The process for the reforming of hydrocarbons, preferably methane, in the presence of CO₂ according to claim 1, wherein the hexaaluminate-comprising catalyst has a molar ratio of cobalt to aluminum in the range from 0.05 to 0.09 and a molar ratio of at least one element from the group consisting of Ba, Sr, La (M^{BaSrLa}) to aluminum in a range from 0.09 to 0.25 and a molar ratio of Co to the at least one element from the group consisting of Ba, Sr, La (M^{BaSrLa}) in the range from 1.0 to 0.3.

3. The process for the reforming of hydrocarbons, preferably methane, in the presence of CO₂ according to either of claims 1 and 2, wherein the hexaaluminate-comprising catalyst has a BET surface greater than 4 m²/g.

4. The process for the reforming of hydrocarbons, preferably methane, in the presence of carbon dioxide according to any of claims 1 to 3, wherein the reforming gas mentioned in step (a.1) has an H₂O content of up to 30% by volume.

5. The process for the reforming of hydrocarbons, preferably methane, in the presence of carbon dioxide according to any of claims 1 to 4, wherein the reforming process is preceded by an activation process and/or a conditioning process.

6. The process for the reforming of hydrocarbons, preferably methane, in the presence of carbon dioxide according to any of claims 1 to 5, wherein the feed fluid comprises steam and has a composition in which the components CH₄/CO₂/H₂O are present in a ratio range of the gas volumes from 35/35/30 to 48/48/4.

7. The process for the reforming of hydrocarbons, preferably methane, in the presence of carbon dioxide according to any of claims 1 to 6, wherein the catalyst comprises at least one noble metal-comprising promoter from the group consisting of Pt, Rh, Pd, Ir and the content of noble metal-comprising promoter is in the range of 0.1 - 3 mol% or the catalyst comprises further cations, preferably from the group consisting of Mg, Ca, Ga, Be, Ni, Fe, Cr, Mn.

## Revendications

1. Procédé de reformage d'hydrocarbures, de préférence de méthane, en présence de CO₂, qui comprend les étapes suivantes :
(a.1) mise en contact de gaz de reformage, dans lequel la proportion d'hydrocarbure, de préférence de méthane, et de CO₂ est au total supérieure à 70% en volume, avec un catalyseur contenant de l'hexaaluminate,
(a.2) chauffage du catalyseur lors de la mise en contact avec le gaz de reformage à une température > 973,15 K,
(a.3) fonctionnement du réacteur pendant la réalisation de la réaction à une pression de procédé > 5 bars,
(a.4) le gaz de reformage mis en contact avec le catalyseur présente une GHSV (Gas Hourly Space Velocity - vitesse spatiale horaire gazeuse) qui se situe dans une plage de 500 à 20000 h⁻¹ et dans lequel
le catalyseur contenant de l'hexaaluminate contient du cobalt et au moins un autre métal du groupe Ba, Sr, La et dans lequel le catalyseur contenant de l'hexaaluminate, qui présente une surface selon BET supérieure à 2 m²/g, présente une teneur en Co dans la plage de 2-15% en mole, une teneur en autre métal du groupe Ba, Sr, La dans une plage de 2-25% en mole et une teneur en Al dans la plage de 70-90% en mole et le catalyseur présente une phase secondaire oxyde dans la plage de 3-40% en poids qui est choisie dans le groupe oxyde de thêta-aluminium, oxyde d'alpha-aluminium, LaAlO₃, BaAl₂O₄, SrAl₂O₄, CoAl₂O₄, les oxydes d'aluminium stabilisés par La, l'hydroxyde d'aluminium stabilisé par La.

2. Procédé de reformage d'hydrocarbures, de préférence de méthane, en présence de CO₂ selon la revendication 1, dans lequel le catalyseur contenant de l'hexaaluminate présente un rapport molaire de cobalt à aluminium dans la plage de 0,05 à 0,09 ainsi qu'un rapport molaire d'au moins un élément du groupe Ba, Sr, La (M^{BaSrLa}) à aluminium dans une plage de 0,09 à 0,25 et un rapport molaire de Co à au moins un élément du groupe Ba, Sr, La (M^{BaSrLa}) dans la plage de 1,0 à 0,3.

3. Procédé de reformage d'hydrocarbures, de préférence de méthane, en présence de CO₂ selon l'une des revendications 1 à 2, dans lequel le catalyseur contenant de l'hexaaluminate présente une surface BET supérieure à 4 m²/g.

4. Procédé de reformage d'hydrocarbures, de préférence de méthane, en présence de dioxyde de carbone selon l'une des revendications 1 à 3, dans lequel le gaz de reformage mentionné dans l'étape (a.1) présente une teneur en H₂O de jusqu'à 30% en volume.

5. Procédé de reformage d'hydrocarbures, de préférence de méthane, en présence de dioxyde de carbone selon l'une des revendications 1 à 4, **caractérisé en ce que** le procédé de reformage est précédé d'un processus d'activation et/ou d'un processus de conditionnement.

6. Procédé de reformage d'hydrocarbures, de préférence de méthane, en présence de dioxyde de carbone selon l'une des revendications 1 à 5, dans lequel le fluide de départ contient de la vapeur d'eau et présente une composition dans laquelle les composants CH₄/CO₂/H₂O se trouvent dans un plage de rapports des volumes gazeux de 35/35/30 à 48/48/4.

7. Procédé de reformage d'hydrocarbures, de préférence de méthane, en présence de dioxyde de carbone selon l'une des revendications 1 à 6, dans lequel le catalyseur contient au moins un promoteur contenant des métaux nobles du groupe Pt, Rh, Pd, Ir et la teneur en promoteur contenant des métaux nobles se situe dans la plage de 0,1-3% en mole ou le catalyseur comprend d'autres cations, de préférence du groupe Mg, Ca, Ga, Be, Ni, Fe, Cr, Mn.
